# EUROPEAN PATENT APPLICATION

(11) **EP 4 717 395 A1**
(43) Date of publication of application: **01.04.2026**
(21) Application number: 24928503.2
(22) Date of filing: 08.03.2024
(51) Int. Cl.: B23K 26/00, B23K 26/38

(54) **CONTROL DEVICE FOR LASER PROCESSING MACHINE, LASER PROCESSING SYSTEM, AND LASER PROCESSING METHOD**

(71) Applicant: Yamazaki Mazak Corporation, Niwa-gun, Aichi 480-0197 (JP)
(72) Inventor: HATTORI, Shouta, Niwa-gun, Aichi 480-0197 (JP); MIWA, Daisuke, Niwa-gun, Aichi 480-0197 (JP); NAKAMOTO, Tetsuro, Niwa-gun, Aichi 480-0197 (JP); SUMIDA, Yasuharu, Niwa-gun, Aichi 480-0197 (JP)
(74) Representative: TBK
(86) International application number: PCT/JP2024/008960
(87) International publication number: WO 2025/187029

(57) **Abstract**

A controller for a laser beam machine includes a display, an inputter, a computing apparatus, and a communication circuit. The display is configured to display a first machining result indicating a machining result of a first part produced by the laser beam machine. The laser beam machine operates based on a first control command generated by execution of at least one machining program. The inputter is configured to, when an additional order quantity of the first part is defined as a first quantity and a process including making a determination of arrangement of the first quantity of the first part in at least one workpiece is defined as a nesting process, receive input of the first quantity or input of a first instruction to change the first quantity and a start instruction for the nesting process. The computing apparatus is configured to generate a second control command that causes the laser beam machine to produce the first quantity of the first part from the at least one workpiece by executing at least one additional machining program generated based on a result of the nesting process. The communication circuit is configured to transmit the second control command to the laser beam machine.

## Description

### Technical Field

The present invention relates to a controller for a laser beam machine, a laser beam machining system, and a laser beam machining method.

### Background Art

A nesting process is known in which arrangement of parts in a workpiece is determined.

Patent Literature 1 discloses a laser beam machine as a related technique. Description of Patent Literature 1 discloses (1) transmitting a result of a nesting process as machining region data from a computer to a numerical control unit via a network, (2) displaying an image indicating the result of the nesting process on a touch-panel display of the numerical control unit, (3) having a user to check the image, and (4) machining, by the laser beam machine, a sheet metal when the user inputs starting of laser beam machining via a touch panel.

### Citation List

### Patent Literature

PTL 1: JP 6711965 B1

### Summary of Invention

### Technical Problem

It is an object of the present invention to provide a controller for a laser beam machine, a laser beam machining system, and a laser beam machining method that are capable of smoothly executing a procedure for additionally producing a part.

### Solution to Problem

A controller according to some embodiments for a laser beam machine includes a display, an inputter, a computing apparatus, and a communication circuit. The display is configured to display a first machining result indicating a machining result of a first part produced by the laser beam machine. The laser beam machine operates based on a first control command generated by execution of at least one machining program. The inputter is configured to, when an additional order quantity of the first part is defined as a first quantity and a process including making a determination of arrangement of the first quantity of the first part in at least one workpiece is defined as a nesting process, receive input of the first quantity or input of a first instruction to change the first quantity and a start instruction for the nesting process. The computing apparatus is configured to generate a second control command that causes the laser beam machine to produce the first quantity of the first part from the at least one workpiece by executing at least one additional machining program generated based on a result of the nesting process. The communication circuit is configured to transmit the second control command to the laser beam machine.

A laser beam machining system according to some embodiments includes a laser beam machine and a controller configured to control the laser beam machine. The controller includes a display, an inputter, a computing apparatus, and a communication circuit. The display is configured to display a first machining result indicating a machining result of a first part produced by the laser beam machine. The laser beam machine operates based on a first control command generated by execution of at least one machining program. The inputter is configured to, when an additional order quantity of the first part is defined as a first quantity and a process including making a determination of arrangement of the first quantity of the first part in at least one workpiece is defined as a nesting process, receive input of the first quantity or input of a first instruction to change the first quantity and a start instruction for the nesting process. The computing apparatus is configured to generate a second control command that causes the laser beam machine to produce the first quantity of the first part from the at least one workpiece by executing at least one additional machining program generated based on a result of the nesting process. The communication circuit is configured to transmit the second control command to the laser beam machine.

A laser beam machining method according to some embodiments includes generating at least one machining program. A first control command is generated by a controller configured to execute the at least one machining program. At least one first part is produced by a laser beam machine configured to receive the first control command. On a display of the controller, a first machining result is displayed indicating a machining result of the first part produced by the laser beam machine operating based on the first control command. By an inputter of the controller, input of a first quantity indicating an additional order quantity of the first part or input of a first instruction to change the first quantity is received. A nesting process is performed including making a determination of arrangement of the first quantity of the first part in at least one workpiece. At least one additional machining program is generated, based on a result of the nesting process. A second control command is generated by the controller configured to execute the at least one additional machining program. The first quantity of the first part is produced from the at least one workpiece by the laser beam machine configured to receive the second control command.

### Effects of Invention

The present invention provides a controller for a laser beam machine, a laser beam machining system, and a laser beam machining method that are capable of smoothly executing a procedure for additionally producing a part.

### Brief Description of Drawings

[FIG. 1] FIG. 1 is a diagram schematically illustrating a laser beam machining system according to a first embodiment.
[FIG. 2] FIG. 2 is a schematic perspective view of a plurality of parts produced based on at least one machining program.
[FIG. 3] FIG. 3 is a diagram schematically illustrating a state in which machining results of parts are displayed on a display.
[FIG. 4] FIG. 4 is a diagram schematically illustrating a state in which a first quantity indicating an additional order quantity of a first part is input.
[FIG. 5] FIG. 5 is a diagram schematically illustrating a state in which the first quantity indicating the additional order quantity of the first part is input.
[FIG. 6] FIG. 6 is a diagram schematically illustrating a state in which arrangement of a plurality of parts in a plurality of workpieces, determined by execution of a nesting process, is displayed on the display.
[FIG. 7] FIG. 7 is a diagram schematically illustrating a state in which a controller automatically generates at least one additional machining program, based on the first quantity.
[FIG. 8] FIG. 8 is a diagram schematically illustrating a state in which the at least one additional machining program generated by a CAD/CAM system is transmitted to the controller, according to a modification.
[FIG. 9] FIG. 9 is a diagram schematically illustrating the laser beam machining system according to the first embodiment.
[FIG. 10] FIG. 10 is a diagram schematically illustrating an example of information stored in a memory.
[FIG. 11] FIG. 11 is a diagram schematically illustrating a state in which machining results of parts are displayed on the display.
[FIG. 12] FIG. 12 is a diagram schematically illustrating a state in which the machining results of the parts are displayed on the display.
[FIG. 13] FIG. 13 is a diagram schematically illustrating a state in which a first defective part quantity is being input.
[FIG. 14] FIG. 14 is a diagram schematically illustrating a state in which the first quantity indicating the additional order quantity of the first part is automatically corrected in response to the input of the first defective part quantity.
[FIG. 15] FIG. 15 is a diagram schematically illustrating a state in which the first quantity indicating the additional order quantity of the first part is input in a first quantity input field.
[FIG. 16] FIG. 16 is a diagram schematically illustrating a state in which types of parts to be additionally ordered are selected.
[FIG. 17] FIG. 17 is a diagram schematically illustrating a state in which the types of parts to be additionally ordered are selected.
[FIG. 18] FIG. 18 is a diagram schematically illustrating an example of information stored in the memory.
[FIG. 19] FIG. 19 is a diagram schematically illustrating a state in which an image that accepts a start instruction for generating an order list is displayed on the display.
[FIG. 20] FIG. 20 is a diagram schematically illustrating a state in which a list is displayed that includes part type identifiers identifying the types of parts that have been additionally ordered and additional order quantities of the parts corresponding to the part type identifiers, on the display 2.
[FIG. 21] FIG. 21 is a diagram schematically illustrating a state in which input fields of nesting conditions are displayed on the display.
[FIG. 22] FIG. 22 is a diagram schematically illustrating a state in which the arrangement of the plurality of parts in the plurality of workpieces, determined by the execution of the nesting process, is displayed on the display.
[FIG. 23] FIG. 23 is a diagram schematically illustrating a state in which an image including an execution result of the nesting process is displayed on the display.
[FIG. 24] FIG. 24 is a diagram schematically illustrating a state in which an image including the execution result of the nesting process is displayed on the display.
[FIG. 25] FIG. 25 is a diagram schematically illustrating an example of information stored in the memory.
[FIG. 26] FIG. 26 is a schematic perspective view of the laser beam machining system according to the first embodiment.
[FIG. 27] FIG. 27 is a schematic perspective view of the laser beam machining system according to the first embodiment.
[FIG. 28] FIG. 28 is a diagram schematically illustrating a laser beam machining system according to a second embodiment.
[FIG. 29] FIG. 29 is a diagram schematically illustrating a state in which machining results of parts are displayed on the display.
[FIG. 30] FIG. 30 is a diagram schematically illustrating a state in which the first quantity indicating the additional order quantity of the first part is input.
[FIG. 31] FIG. 31 is a diagram schematically illustrating a state in which the first defective part quantity is input.
[FIG. 32] FIG. 32 is a diagram schematically illustrating an example of information stored in the memory.
[FIG. 33] FIG. 33 is a diagram schematically illustrating the laser beam machining system according to the second embodiment.
[FIG. 34] FIG. 34 is a diagram schematically illustrating a state in which an image including an execution result of the nesting process is displayed on the display.
[FIG. 35] FIG. 35 is a diagram schematically illustrating an example of information stored in the memory.
[FIG. 36] FIG. 36 is a diagram schematically illustrating the laser beam machining system according to the second embodiment.
[FIG. 37] FIG. 37 is a flowchart illustrating an example of a laser beam machining method according to a third embodiment.
[FIG. 38] FIG. 38 is a diagram schematically illustrating a state in which machining results of parts are displayed on the display.

### Description of Embodiments

Hereafter, a controller 1 of a laser beam machine, a laser beam machining system 100, and a laser beam machining method according to embodiments will be described with reference to the drawings. Note that, in the following description of the embodiments, identical reference numerals are given to portions and members having identical functions, and descriptions of the portions and members with the identical reference numerals that are deemed redundant will be omitted.

### (First Embodiment)

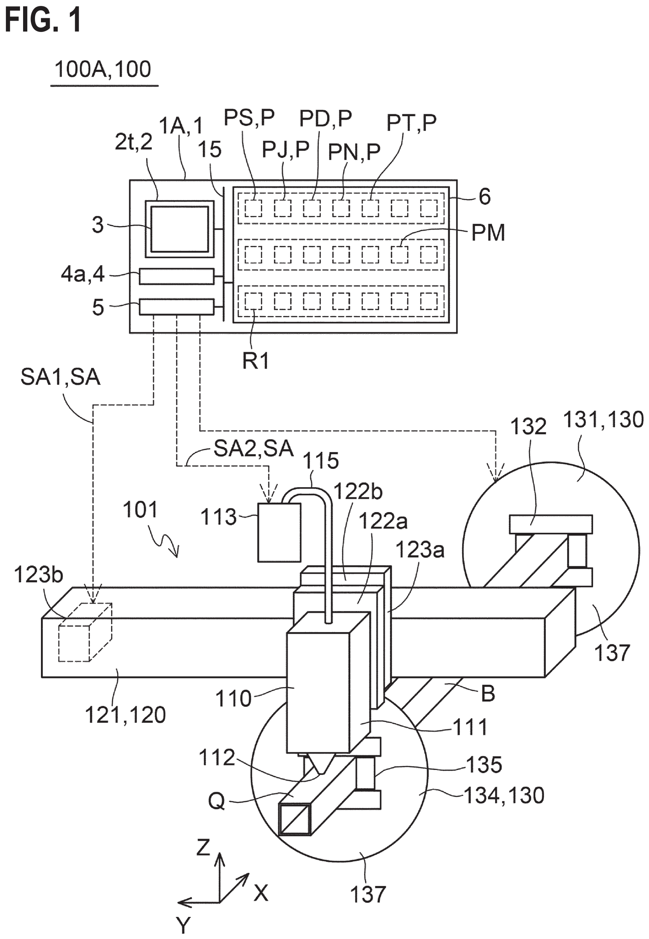

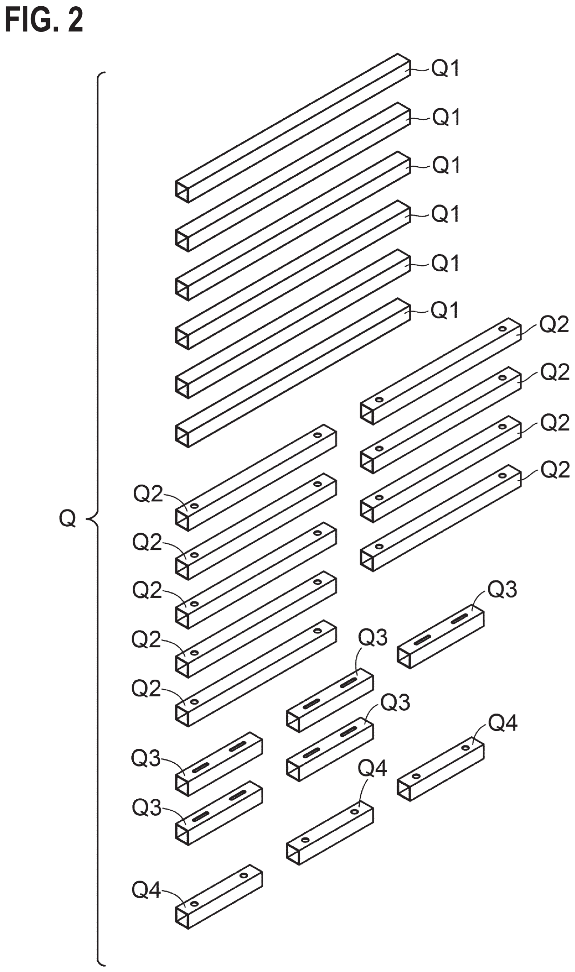

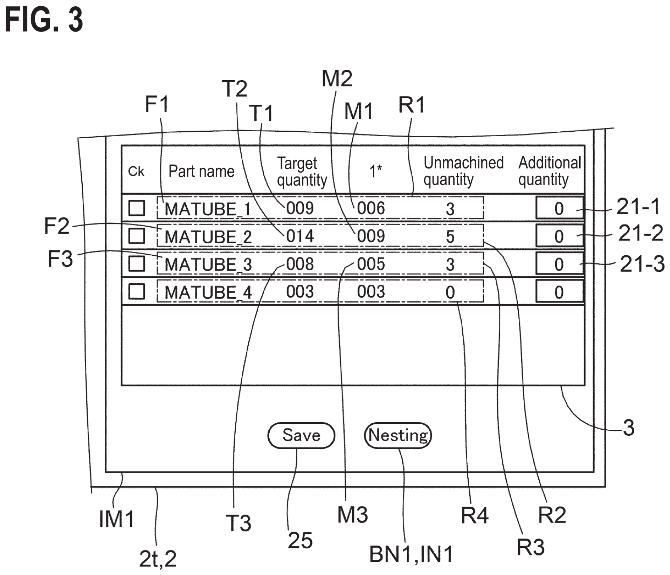

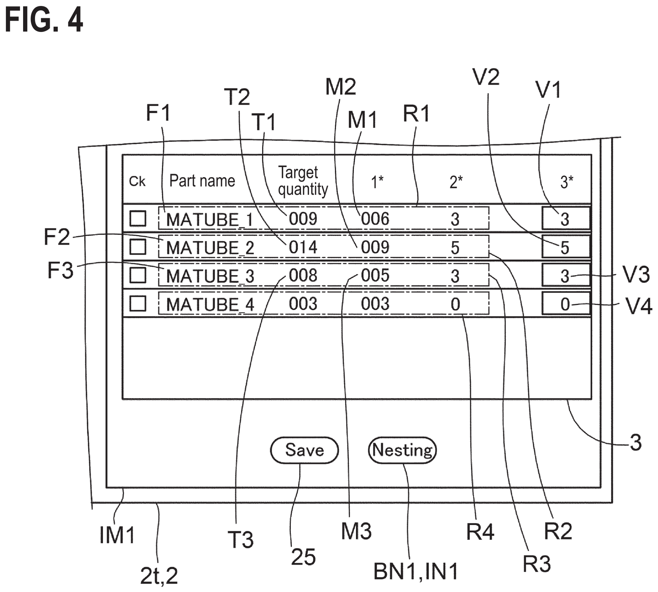

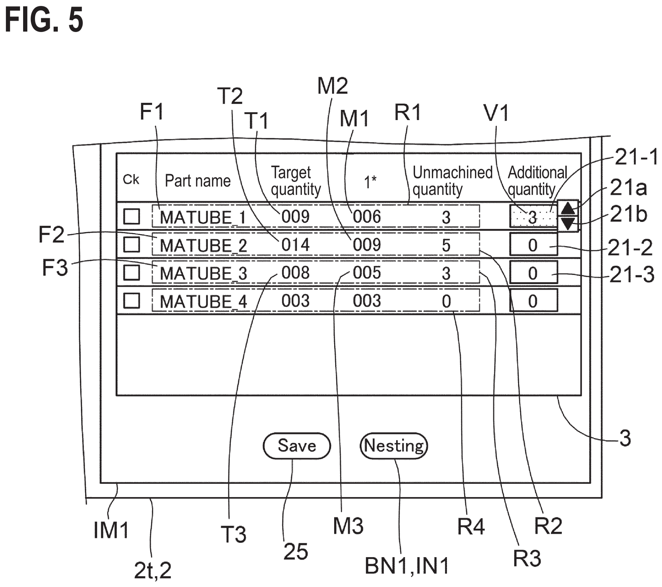

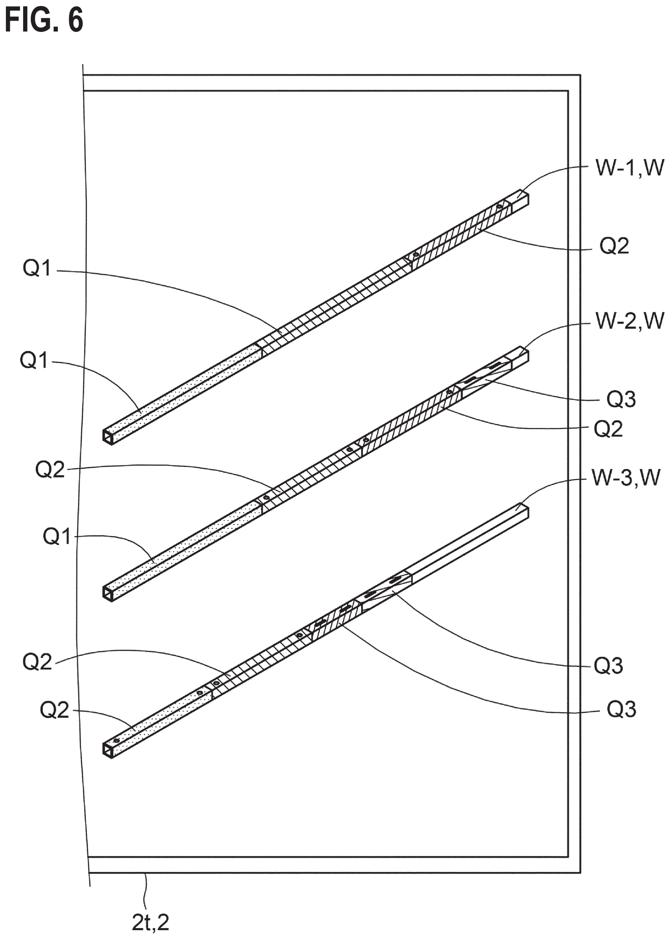

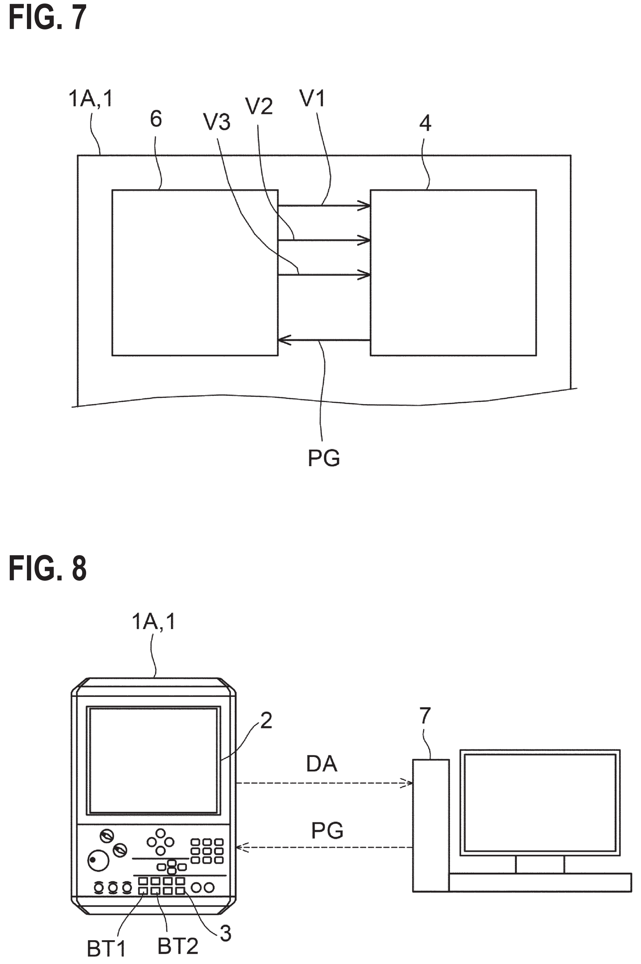

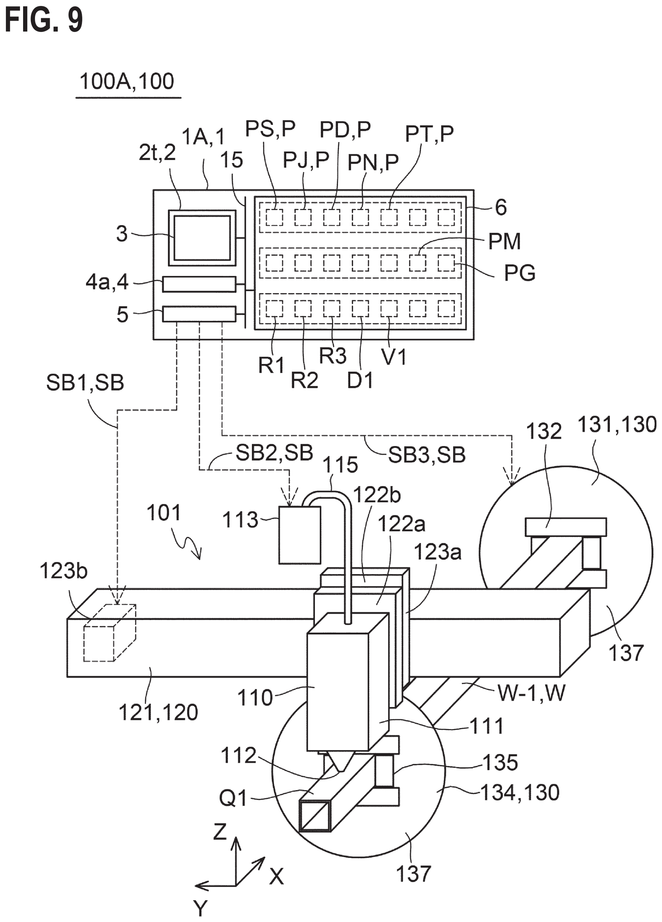

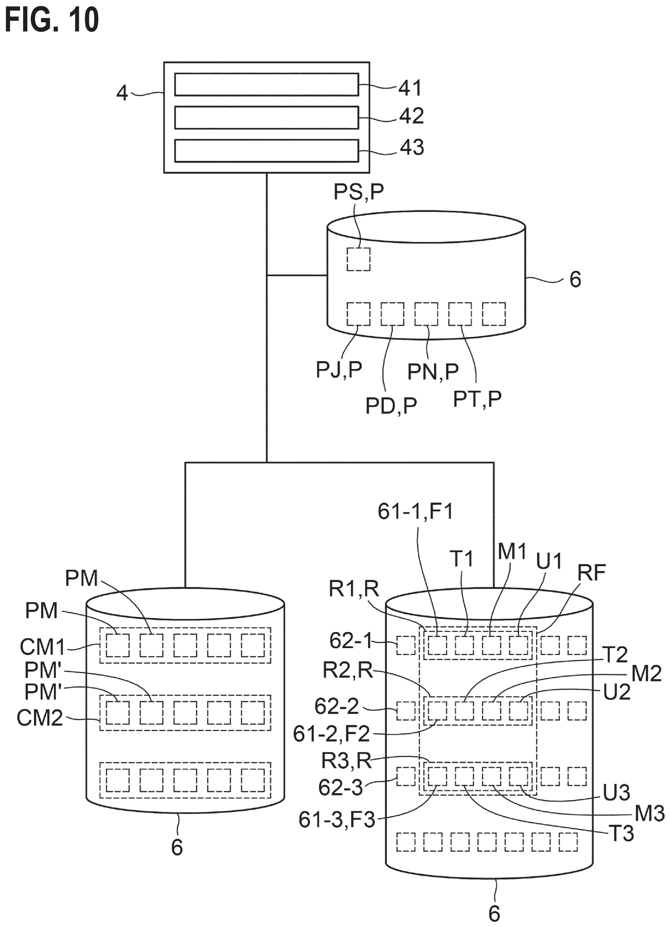

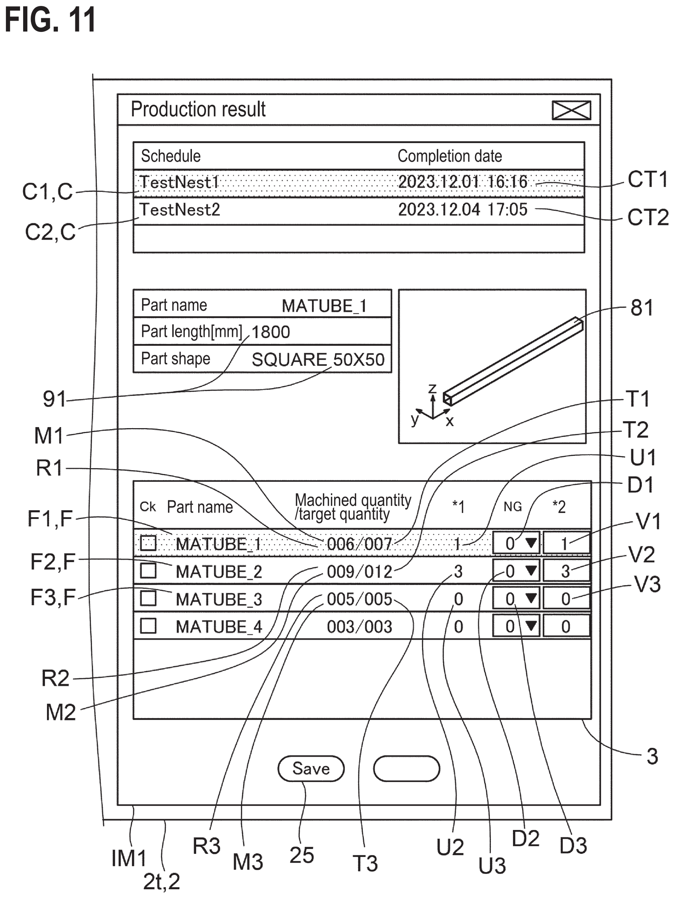

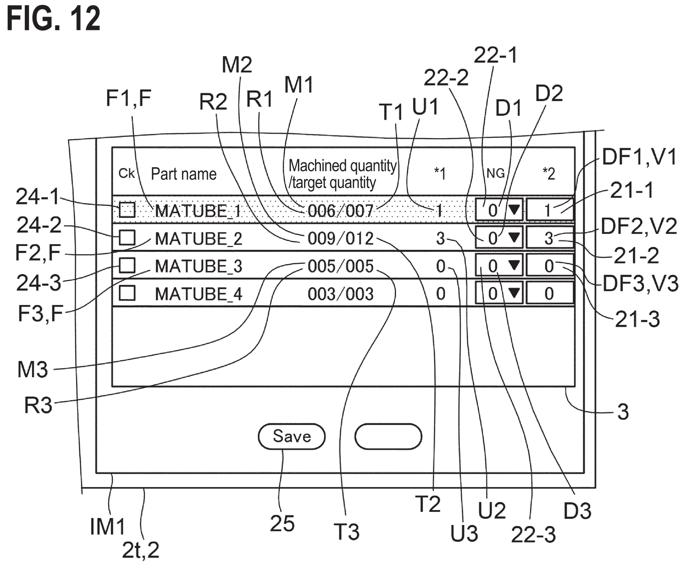

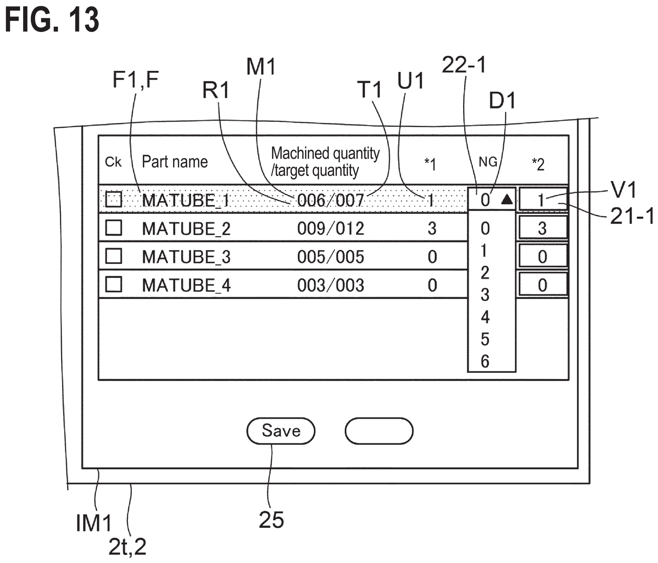

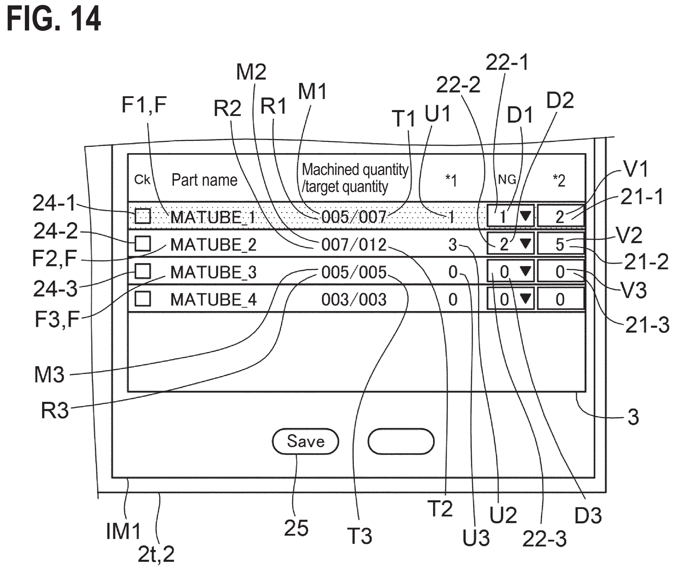

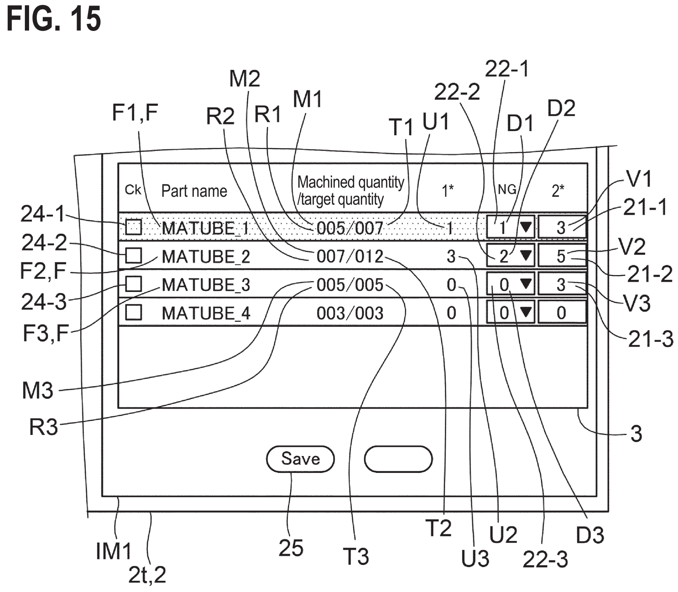

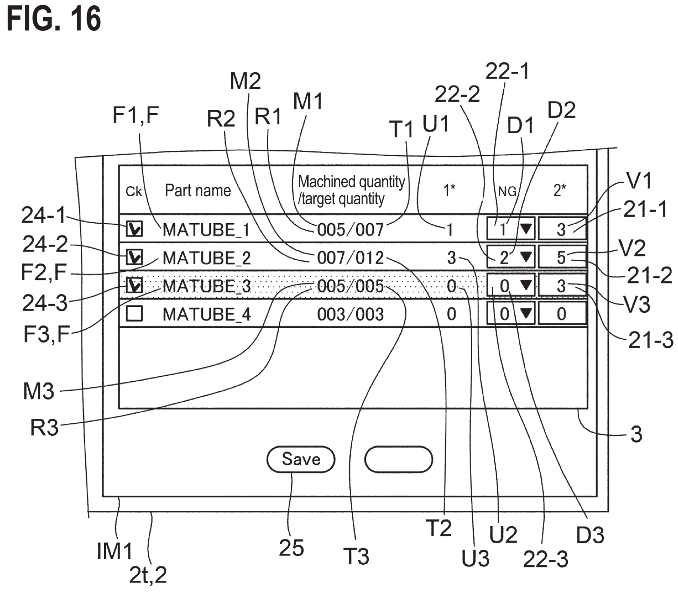

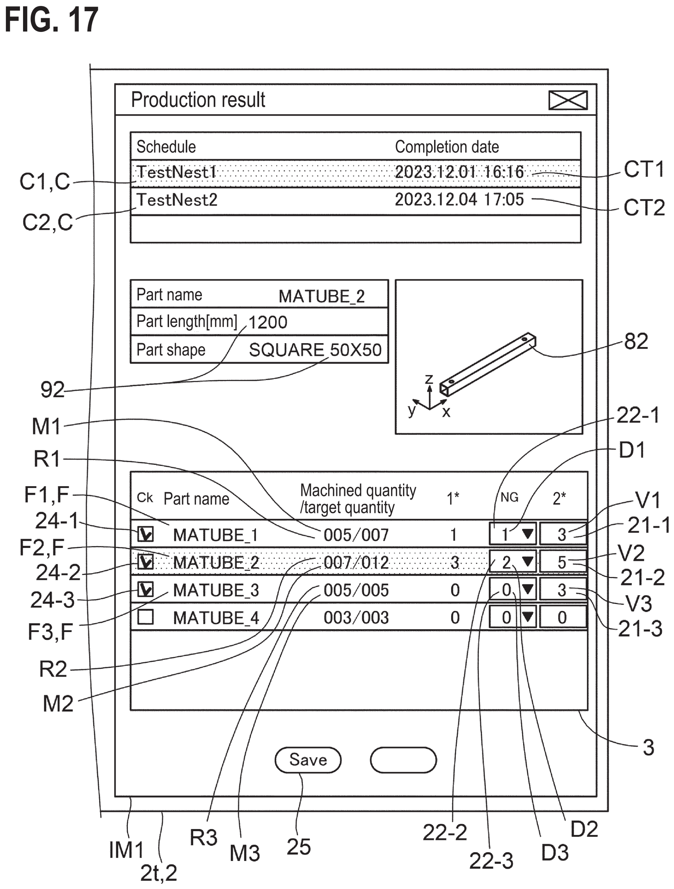

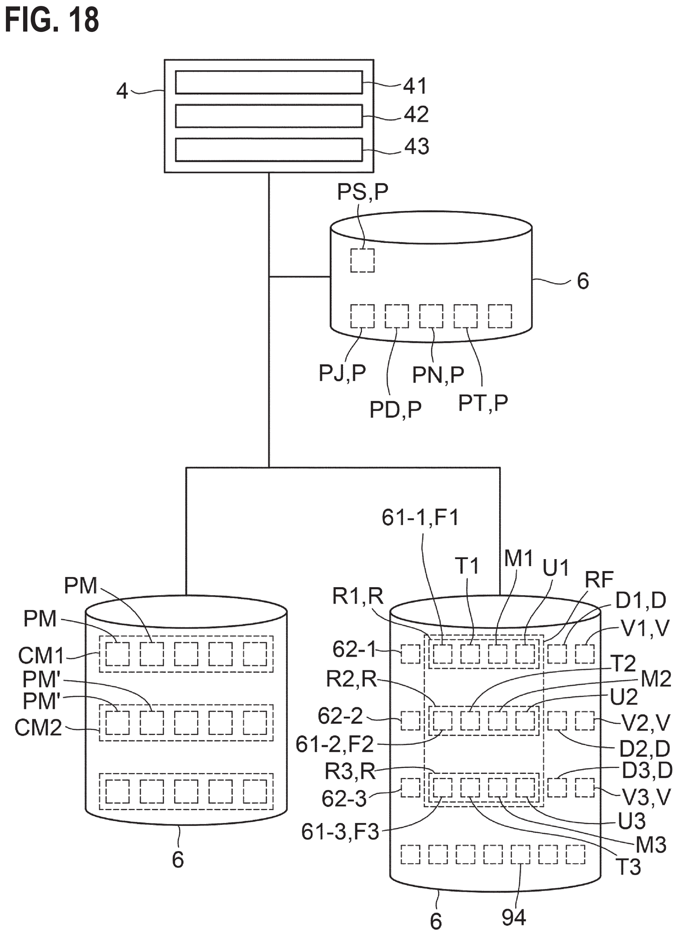

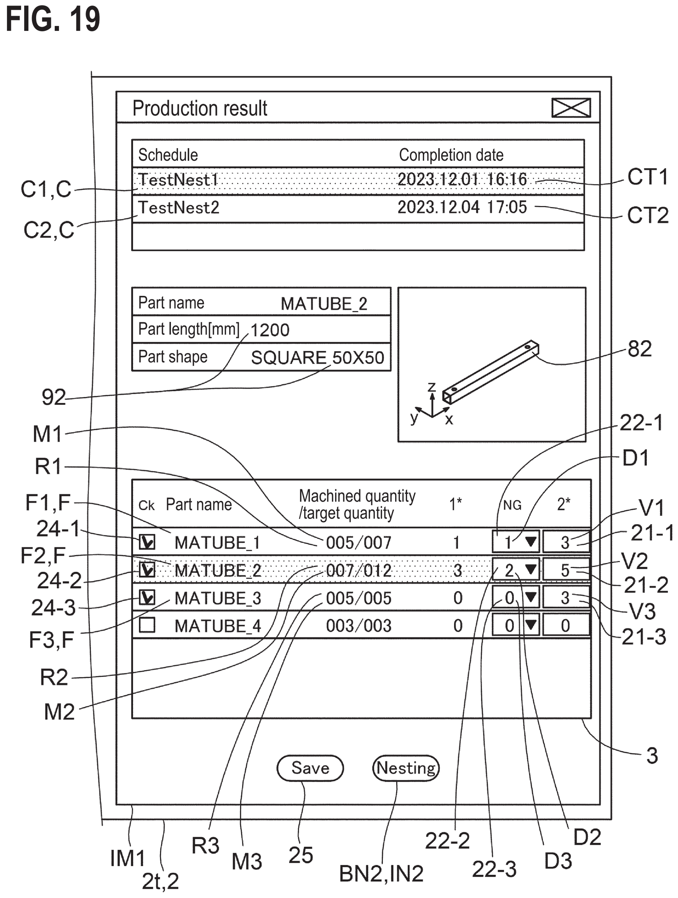

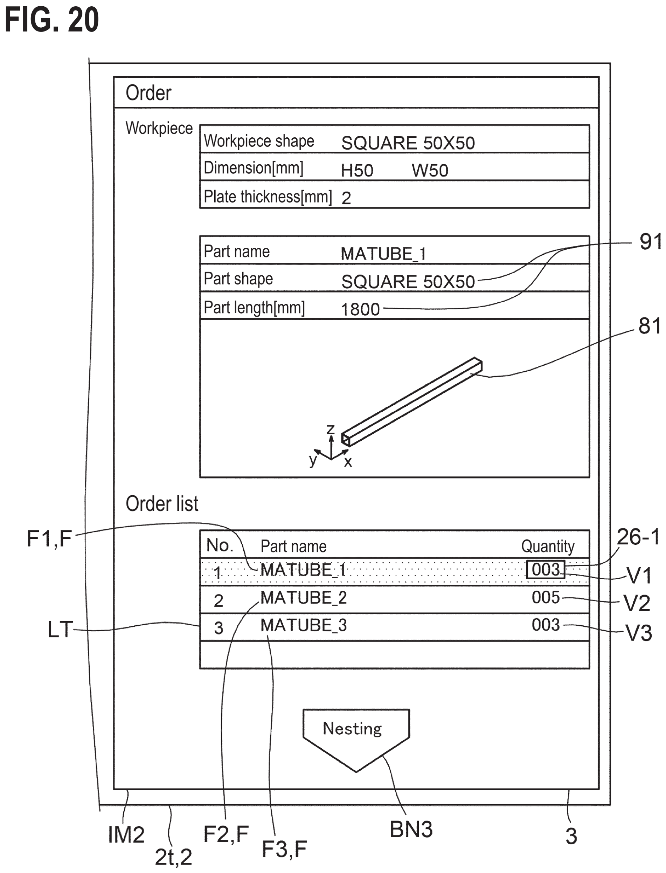

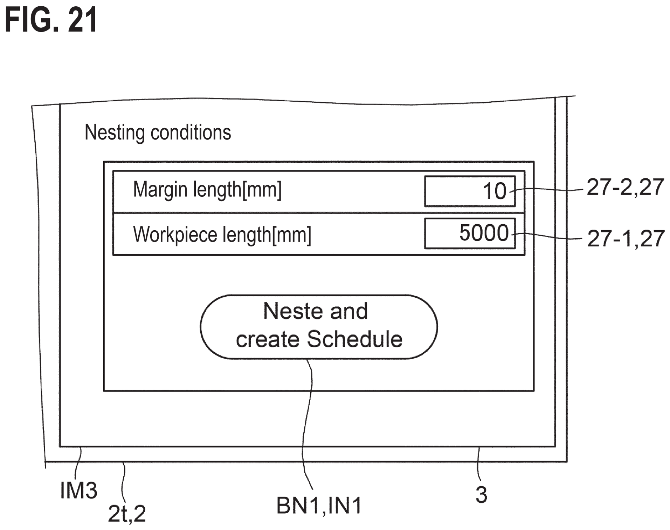

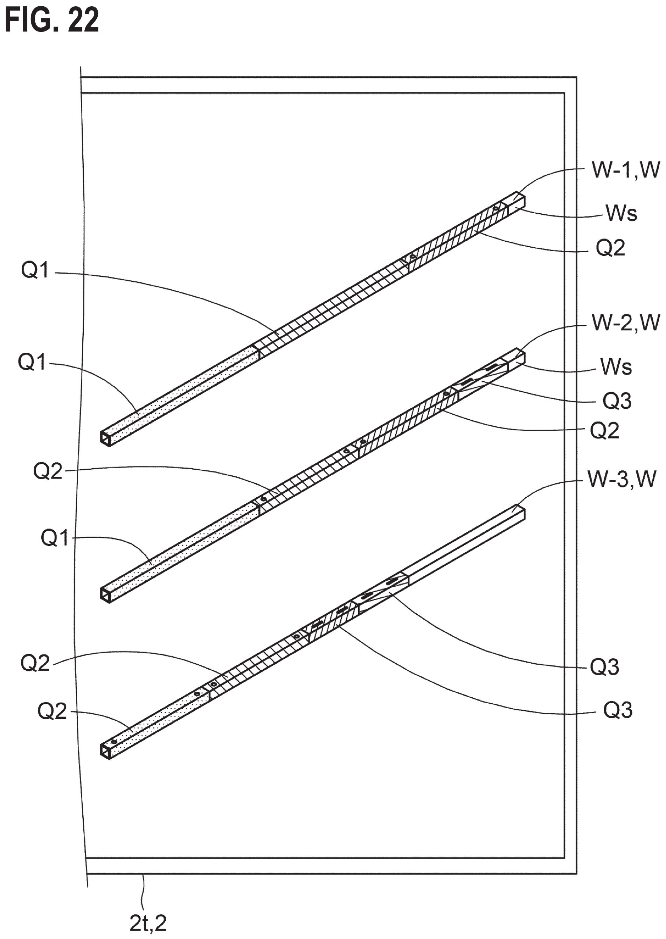

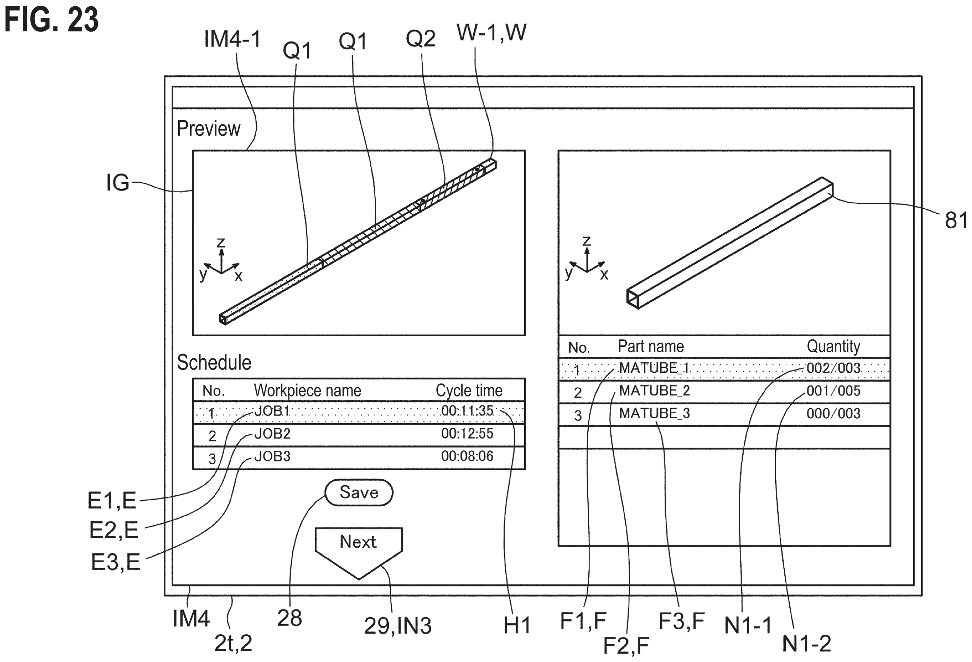

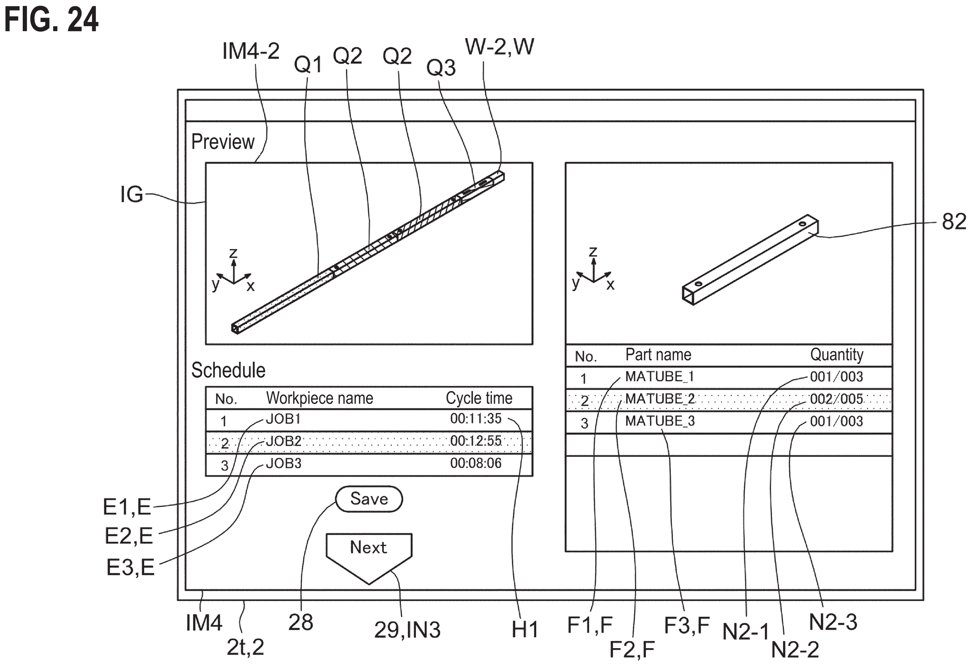

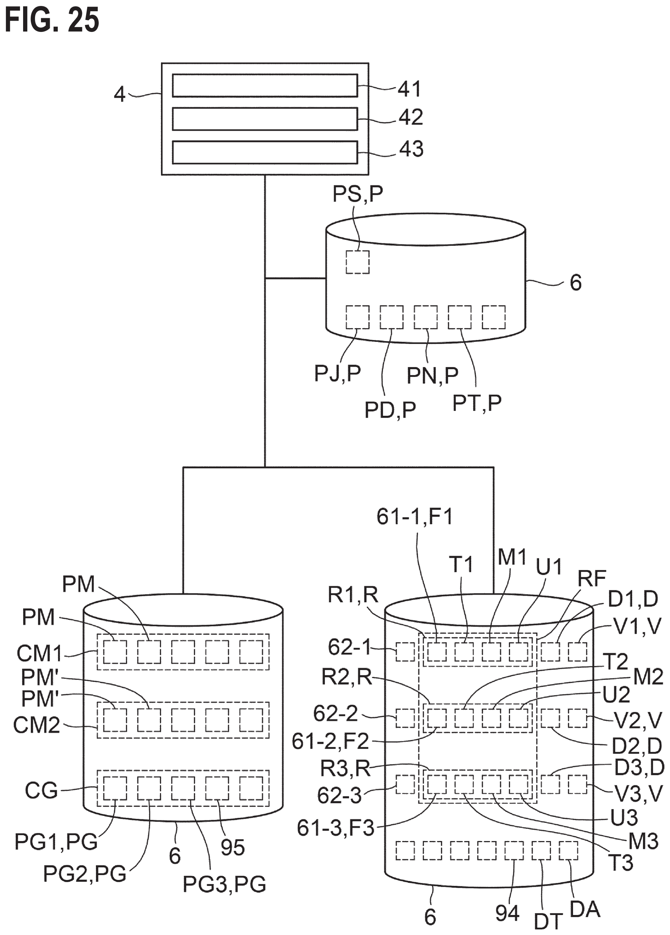

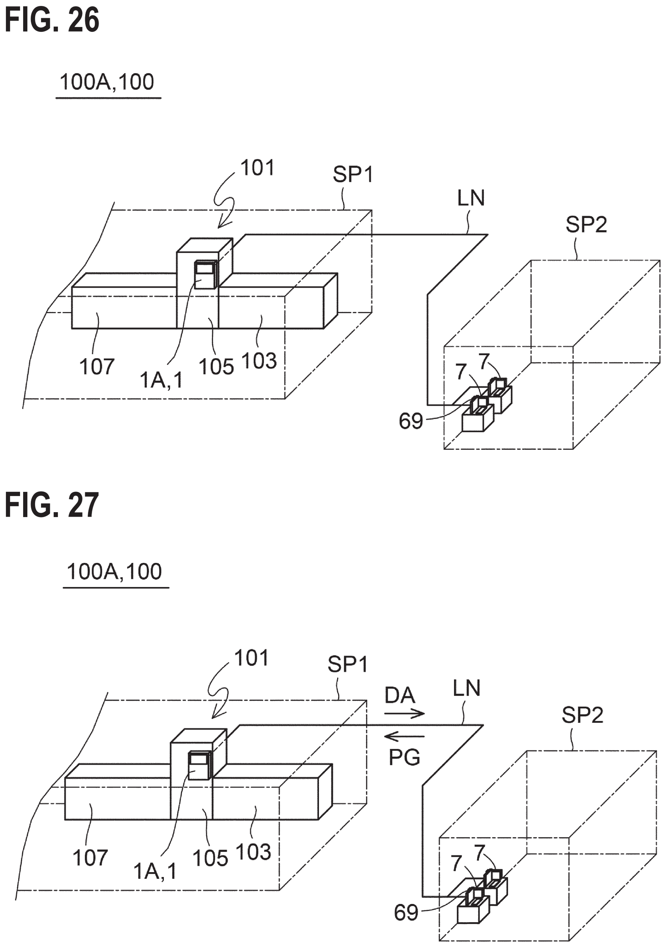

Referring to FIGs. 1 to 27, a controller 1A of the laser beam machine and a laser beam machining system 100A according to a first embodiment will be described. FIG. 1 is a diagram schematically illustrating the laser beam machining system 100A according to the first embodiment. FIG. 2 is a schematic perspective view of a plurality of parts Q produced based on at least one machining program PM. FIG. 3 is a diagram schematically illustrating a state in which machining results of parts are displayed on a display 2. FIG. 4 is a diagram schematically illustrating a state in which a first quantity V1 indicating an additional order quantity of a first part Q1 is input. FIG. 5 is a diagram schematically illustrating a state in which the first quantity V1 indicating the additional order quantity of the first part Q1 is input. FIG. 6 is a diagram schematically illustrating a state in which arrangement of a plurality of parts in a plurality of workpieces W, determined by execution of a nesting process, is displayed on the display 2. FIG. 7 is a diagram schematically illustrating a state in which the controller 1A automatically generates at least one additional machining program PG, based on the first quantity V1. FIG. 8 is a diagram schematically illustrating a state in which the at least one additional machining program PG generated by a CAD/CAM system 7 is transmitted to the controller 1A, according to a modification. FIG. 9 is a diagram schematically illustrating the laser beam machining system 100A according to the first embodiment. FIG. 10 is a diagram schematically illustrating an example of information stored in a memory 6. FIGs. 11 and 12 are diagrams schematically illustrating a state in which machining results of parts are displayed on the display 2. Note that, FIG. 12 illustrates part of FIG. 11. FIG. 13 is a diagram schematically illustrating a state in which a first defective part quantity D1 is being input. FIG. 14 is a diagram schematically illustrating a state in which the first quantity V1 indicating the additional order quantity of the first part Q1 is automatically corrected in response to the input of the first defective part quantity D1. FIG. 15 is a diagram schematically illustrating a state in which the first quantity V1 indicating the additional order quantity of the first part Q1 is input in a first quantity input field 21-1. FIGs. 16 and 17 are diagrams schematically illustrating states in which types of parts to be additionally ordered are selected. FIG. 18 is a diagram schematically illustrating an example of information stored in the memory 6. FIG. 19 is a diagram schematically illustrating a state in which an image IN2 that accepts, from a user, a start instruction for generating an order list is displayed on the display 2. FIG. 20 is a diagram schematically illustrating a state in which an order list LT is displayed that includes part type identifiers F identifying the types of parts that have been additionally ordered and additional order quantities of the parts corresponding to the part type identifiers F, on the display 2. FIG. 21 is a diagram schematically illustrating a state in which input fields 27 of nesting conditions are displayed on the display 2. FIG. 22 is a diagram schematically illustrating a state in which the arrangement of the plurality of parts in the plurality of workpieces, determined by the execution of the nesting process (for example, the arrangement of the plurality of parts including the first part Q1 and second part Q2 in the plurality of workpieces W including the first workpiece W-1 and the second workpiece W-2), is displayed on the display. FIGs. 23 and 24 are diagrams schematically illustrating a state in which an image including an execution result of the nesting process is displayed on the display 2. FIG. 25 is a diagram schematically illustrating an example of information stored in the memory 6. FIGs. 26 and 27 are schematic perspective views of the laser beam machining system 100A according to the first embodiment.

As illustrated in FIG. 1, the laser beam machining system 100A includes a laser beam machine 101 and the controller 1A.

The laser beam machine 101 produces at least one part Q from a workpiece B by applying a laser beam to the workpiece B. The workpiece B is, for example, a long workpiece such as a pipe.

The controller 1A controls the laser beam machine 101. In the example illustrated in FIG. 1, the controller 1A includes the display 2, an inputter 3, a computing apparatus 4, a communication circuit 5, and the memory 6. In the example illustrated in FIG. 1, the memory 6 stores at least one machining program PM.

The controller 1A (more specifically, the computing apparatus 4) executes a process of generating a first control command SA (hereinafter, referred to as a "first process") by executing the at least one machining program PM. Note that, in the description, that the controller 1A (more specifically, the computing apparatus 4) executes the at least one machining program PM encompasses the controller 1A (more specifically, the computing apparatus 4) executing the at least one machining program PM via a computing program PJ. In other words, the controller 1A (more specifically, the computing apparatus 4) executing the computing program PJ may cause the at least one machining program PM to be processed (in other words, interpreted) by the controller 1A (more specifically, the computing apparatus 4).

The laser beam machine 101 operates based on the first control command SA generated by the execution of the at least one machining program PM by the controller 1A (more specifically, the computing apparatus 4). More specifically, the communication circuit 5 transmits the first control command SA to the laser beam machine 101, and the laser beam machine 101 that receives the first control command SA operates based on the first control command SA. Note that, the first control command SA includes a plurality of commands such as a movement command SA1 that moves a laser head 111 and an emission command SA2 that causes the laser head 111 to emit the laser beam.

FIG. 2 illustrates a first group of parts Q produced by the laser beam machine 101 operating based on the above-described first control command SA. In the example illustrated in FIG. 2, the first group of parts Q includes at least one first part Q1, at least one second part Q2, at least one third part Q3, and at least one fourth part Q4.

As illustrated in FIG. 3, the display 2 displays a first machining result R1 indicating the machining result of the first part Q1 produced by the laser beam machine 101 operating based on the above-described first control command SA. Additionally, the display 2 may display a second machining result R2 indicating the machining result of the second part Q2 produced by the laser beam machine 101 operating based on the above-described first control command SA. The display 2 may display a third machining result R3 indicating the machining result of the third part Q3 produced by the laser beam machine 101 operating based on the above-described first control command SA. Additionally, the display 2 may display a fourth machining result R4 indicating the machining result of the fourth part Q4 produced by the laser beam machine 101 operating based on the above-described first control command SA.

As illustrated in FIG. 4, the additional order quantity of the first part Q1 is defined as the first quantity V1, the additional order quantity of the second part Q2 is defined as a second quantity V2, the additional order quantity of the third part Q3 is defined as a third quantity V3, and the additional order quantity of the fourth part Q4 is defined as a fourth quantity V4.

In the example illustrated in FIG. 4, the inputter 3 is incorporated in the display 2. More specifically, the display 2 is a touch-panel display 2t. Alternatively, the inputter 3 may be provided separately from the display 2. For example, the inputter 3 may include a keyboard or a pointing device, such as a mouse, provided separately from the display 2.

The inputter 3 receives input of the first quantity V1 from the user. FIG. 4 illustrates a state after the inputter 3 has received input of the first quantity V1 from the user. In the example illustrated in FIG. 4, the display 2 displays the first machining result R1 and the first quantity V1 at the same time. More specifically, the display 2 displays the first machining result R1 and the first quantity V1 at the same time in response to the inputter 3 receiving the input of the first quantity V1.

As illustrated in FIG. 3, the display 2 may display an input field (hereinafter, referred to as the "first quantity input field 21-1") for the first quantity V1. In the example illustrated in FIG. 4, the first quantity input field 21-1 displayed on the display 2 is a direct entry input field in which the user directly inputs a number. Alternatively, the first quantity input field 21-1 displayed on the display 2 may be a selection input field configured to allow a number to be selected from a plurality of numbers displayed in a list. Further alternatively, as illustrated in FIG. 5, the first quantity input field 21-1 displayed on the display 2 may be a stepper input field in which the first quantity V1 is incremented or decremented by touching or clicking a plus button 21a or a minus button 21b.

Alternatively or additionally, the inputter 3 may be configured to receive input of a first instruction to change the first quantity V1 from the user. In the example illustrated in FIGs. 12 and 14, the first quantity V1 is changed upon input of the first defective part quantity D1 into the computing apparatus 4 via the inputter 3 (details will be described later). In the example illustrated in FIGs. 12 and 14, the input of the first defective part quantity D1 is one form of input of the first instruction to change the first quantity V1. In the example illustrated in FIGs. 12 and 14, the inputter 3 receives the input of the first instruction to change the first quantity V1 (for example, the input of the first defective part quantity D1). Additionally, the value of the first quantity V1 displayed on the display 2 is changed in response to receiving the input of the first instruction to change the first quantity V1 through the inputter 3 (refer to FIG. 14). In the example illustrated in FIG. 14, the display 2 displays the first machining result R1 and the first quantity V1 at the same time in response to receiving the input of the first instruction to change the first quantity V1 through the inputter 3. In the example illustrated in FIG. 14, the display 2 displays the first machining result R1 and the first quantity V1 in the same line.

Additionally, the inputter 3 may receive input of the second quantity V2 or input of a second instruction to change the second quantity V2 from the user. In the example illustrated in FIG. 4, the display 2 displays the second machining result R2 and the second quantity V2 at the same time in response to receiving the input of the second quantity V2 through the inputter 3. Additionally, in the example illustrated in FIGs. 12 and 14, the value of the second quantity V2 displayed on the display 2 is changed in response to receiving the input of the second instruction to change the second quantity V2 (for example, input of a second defective part quantity D2) through the inputter 3. The display 2 may display the second machining result R2 and the second quantity V2 at the same time in response to receiving the input of the second quantity V2 or the input of the second instruction to change the second quantity V2 through the inputter 3. The display 2 may display the second machining result R2 and the second quantity V2 in the same line.

Additionally, the inputter 3 may receive input of the third quantity V3 or input of a third instruction to change the third quantity V3 from the user. In the example illustrated in FIG. 4, the display 2 displays the third machining result R3 and the third quantity V3 at the same time in response to receiving the input of the third quantity V3 through the inputter 3. Additionally, in the example illustrated in FIG. 12, the value of the third quantity V3 displayed on the display 2 may be changed in response to receiving the input of the third instruction to change the third quantity V3 (for example, input of a third defective part quantity D3) through the inputter 3. The display 2 may display the third machining result R3 and the third quantity V3 at the same time in response to receiving the input of the third quantity V3 or the input of the third instruction to change the third quantity V3 through the inputter 3. The display 2 may display the third machining result R3 and the third quantity V3 in the same line.

In the description, a process including determining the arrangement of the first quantity V1 of the first part Q1 in at least one workpiece W is defined as a nesting process. The nesting process may include determining the arrangement of the second quantity V2 of the second part Q2 in the at least one workpiece W. Additionally, the nesting process may include determining the arrangement of the third quantity V3 of the third part Q3 in the at least one workpiece W. The nesting process is executed by the controller 1A (more specifically, the computing apparatus 4) or other device (for example, the CAD/CAM system 7 illustrated in FIG. 8) communicably coupled to the controller 1A. More specifically, the controller 1A (or other device such as the CAD/CAM system 7) executes the nesting process, based on at least the first quantity V1.

FIG. 6 schematically illustrates an example of the arrangement of at least one part in the at least one workpiece W determined by the execution of the nesting process. In the example illustrated in FIG. 6, the first quantity V1 of the first part Q1, the second quantity V2 of the second part Q2, and the third quantity V3 of the third part Q3 are arranged in three workpieces W (more specifically, three workpieces W that have the same shape).

In the example illustrated in FIG. 4, the inputter 3 receives the start instruction for the nesting process. In the example illustrated in FIG. 4, the display 2 displays an image IN1 that accepts the start instruction for the nesting process (for example, a first button BN1 that accepts the start instruction for the nesting process). Additionally, the inputter 3 receives the start instruction for the nesting process upon the image IN1 being directly touched or the image IN1 being clicked using a pointing device. Alternatively, the inputter 3 may receive the start instruction for the nesting process in response to a hardware button BT1 of the controller 1A being operated (refer to FIG. 8 if necessary). In other words, the inputter 3 may include the hardware button BT1 that receives the start instruction for the nesting process.

In the example illustrated in FIG. 7, the controller 1A (more specifically, the computing apparatus 4) generates the at least one additional machining program PG, based on at least the first quantity V1 (more specifically, based on a result of the nesting process).

Alternatively, as illustrated in FIG. 8, other device (for example, the CAD/CAM system 7) different from the controller 1A may generate the at least one additional machining program PG, based on at least the first quantity V1 (more specifically, based on the result of the nesting process).

In the example illustrated in FIG. 8, the controller 1A transmits data DA including the first quantity V1 to the CAD/CAM system 7. The CAD/CAM system 7 executes the above-described nesting process, based on at least the first quantity V1. The CAD/CAM system 7 generates the at least one additional machining program PG, based on the result of the nesting process. The CAD/CAM system 7 transmits the at least one additional machining program PG that has been generated to the controller 1A.

As illustrated in FIG. 7, the controller 1A (more specifically, the computing apparatus 4) may execute the above-described nesting process, based on at least the first quantity V1 and the second quantity V2. Additionally, the controller 1A (more specifically, the computing apparatus 4) may generate the at least one additional machining program PG, based on the result of the nesting process performed based on at least the first quantity V1 and the second quantity V2.

Alternatively, at least one of the nesting process and generation of the at least one additional machining program PG may be performed by other device (for example, the CAD/CAM system 7) different from the controller 1A.

For example, in the example illustrated in FIG. 8, the controller 1A may transmit the data DA including the first quantity V1 and the second quantity V2 to the CAD/CAM system 7. In this case, the CAD/CAM system 7 executes the above-described nesting process, based on at least the first quantity V1 and the second quantity V2. The CAD/CAM system 7 generates the at least one additional machining program PG, based on the result of the nesting process. The CAD/CAM system 7 transmits the at least one additional machining program PG that has been generated to the controller 1A.

As illustrated in FIG. 7, the controller 1A (more specifically, the computing apparatus 4) may execute the above-described nesting process, based on at least the first quantity V1, the second quantity V2, and the third quantity V3. Additionally, the controller 1A (more specifically, the computing apparatus 4) may generate the at least one additional machining program PG, based on the result of the nesting process performed based on at least the first quantity V1, the second quantity V2, and the third quantity V3.

Alternatively, at least one of the nesting process and generation of the at least one additional machining program PG may be performed by other device (for example, the CAD/CAM system 7) different from the controller 1A.

For example, in the example illustrated in FIG. 8, the controller 1A may transmit the data DA including the first quantity V1, the second quantity V2, and the third quantity V3 to the CAD/CAM system 7. In this case, the CAD/CAM system 7 executes the above-described nesting process, based on at least the first quantity V1, the second quantity V2, and the third quantity V3. The CAD/CAM system 7 generates the at least one additional machining program PG, based on the result of the nesting process. The CAD/CAM system 7 transmits the at least one additional machining program PG that has been generated to the controller 1A.

The at least one additional machining program PG generated by the controller 1A (more specifically, the computing apparatus 4) or other device (for example, the CAD/CAM system 7) different from the controller 1A may be stored in the memory 6 of the controller 1A (refer to FIG. 9). The at least one additional machining program PG stored in the memory 6 may be one additional machining program or an additional machining program group including a plurality of additional machining programs.

The controller 1A (more specifically, the computing apparatus 4) executes a process (hereinafter, referred to as a "second process") of generating a second control command SB that causes the laser beam machine 101 to produce the first quantity V1 of the first part Q1 from the at least one workpiece W by executing the at least one additional machining program PG generated based on at least the first quantity V1 (more specifically, by executing the at least one additional machining program PG generated based on the result of the nesting process). Note that, in the description, that the controller 1A (more specifically, the computing apparatus 4) executes the at least one machining program PG encompasses the controller 1A (more specifically, the computing apparatus 4) executing the at least one additional machining program PG via the computing program PJ. In other words, the at least one additional machining program PG may be processed (in other words, interpreted) by the controller 1A (more specifically, the computing apparatus 4) by executing the computing program PJ.

As illustrated in FIG. 9, the communication circuit 5 transmits the second control command SB to the laser beam machine 101, and the laser beam machine 101 that receives the second control command SB operates based on the second control command SB. Note that, the second control command SB includes a plurality of commands such as a movement command SB 1 that moves the laser head 111 and an emission command SB2 that causes the laser head 111 to emit the laser beam.

In the example illustrated in FIG. 9, the laser beam machine 101 that receives the second control command SB produces the first quantity V1 of the first part Q1 from the at least one workpiece W by applying the laser beam to the at least one workpiece W. The laser beam machine 101 that receives the second control command SB may produce the first quantity V1 of the first part Q1 from one workpiece W by applying the laser beam to one workpiece W. Alternatively, the laser beam machine 101 that receives the second control command SB may produce the first quantity V1 of the first part Q1 from a plurality of workpieces W that have the same shape by applying the laser beam to each of the plurality of workpieces W that have the same shape. Further alternatively, the laser beam machine 101 that receives the second control command SB may produce the first quantity V1 of the first part Q1 from the plurality of workpieces W that have different lengths by applying the laser beam to each of the plurality of workpieces W.

Note that, when the at least one additional machining program PG is generated based on at least the first quantity V1 and the second quantity V2, the controller 1A (more specifically, the computing apparatus 4) that executes the at least one additional machining program PG generates the second control command SB that causes the laser beam machine 101 to produce the first quantity V1 of the first part Q1 and the second quantity V2 of the second part Q2 from the at least one workpiece W. Additionally, the laser beam machine 101 that receives the second control command SB produces the first quantity V1 of the first part Q1 and the second quantity V2 of the second part Q2 from the at least one workpiece W (for example, from the plurality of workpieces W that have the same shape) by applying the laser beam to the at least one workpiece W (for example, by applying the laser beam to each of the plurality of workpieces W that have the same shape).

Additionally, when the at least one additional machining program PG is generated based on at least the first quantity V1, the second quantity V2, and the third quantity V3, the controller 1A (more specifically, the computing apparatus 4) that executes the at least one additional machining program PG generates the second control command SB that causes the laser beam machine 101 to produce the first quantity V1 of the first part Q1, the second quantity V2 of the second part Q2, and the third quantity V3 of the third part Q3 from the at least one workpiece W. Additionally, the laser beam machine 101 that receives the second control command SB produces the first quantity V1 of the first part Q1, the second quantity V2 of the second part Q2, and the third quantity V3 of the third part Q3 from the at least one workpiece W (for example, from the plurality of workpieces W that have the same shape) by applying the laser beam to the at least one workpiece W (for example, by applying the laser beam to each of the plurality of workpieces W that have the same shape).

The controller 1A of the laser beam machine according to the first embodiment includes (1) the display 2 that displays the first machining result R1 indicating the machining result of the first part Q1 produced by the laser beam machine 101 operating based on the first control command SA generated by the execution of the at least one machining program PM, and (2) the inputter 3 that receives the input of the first quantity V1 indicating the additional order quantity of the first part Q1 or the input of the first instruction to change the first quantity V1. It is therefore possible for the user to input the first quantity V1 or the first instruction to change the first quantity V1 taking into consideration the first machining result R1.

In the first embodiment, the first machining result R1 is displayed on the display 2 of the controller 1A, and the inputter 3 of the controller 1A is used to input the above-described first quantity V1 or the above-described first instruction and the start instruction for the nesting process. It is therefore possible for the user (more specifically, an operator) to execute the procedure for additionally producing the first part Q1 on site (more specifically, at the location where the laser beam machine 101 is installed). This facilitates the procedure for additionally producing the first part Q1 and reduces a workload and a work time for additionally producing the first part Q1. Furthermore, it is unnecessary for the user (more specifically, an operator) to move from the site (more specifically, from the location where the laser beam machine 101 is installed) to an office at which management of the machining result is performed in order to additionally produce the first part Q1.

### (Optional Additional Structures)

Next, optional additional structures adoptable in the controller 1A of the laser beam machine and the laser beam machining system 100A according to the first embodiment will be described with reference to FIGs. 1 to 27.

To avoid complexity in the description, hereinafter, an example case where an object to be additionally produced by the laser beam machine 101 is the first part Q1, the second part Q2, and/or the third part Q3 will be described. Note that, however, in the embodiment, the object to be additionally produced by the laser beam machine 101 is not limited to the first part Q1, the second part Q2, and/or the third part Q3. In other words, the embodiment may include other parts (for example, the fourth part Q4) as the object to be additionally produced by the laser beam machine 101.

### (Controller 1A)

In the example illustrated in FIG. 1, the controller 1A includes the display 2, the inputter 3, the computing apparatus 4, the communication circuit 5, and the memory 6. The inputter 3 may be incorporated in the display 2 (more specifically, the display 2 may be the touch-panel display 2t including the inputter 3). Alternatively or additionally, the controller 1A may include the inputter 3 (for example, a button, a switch, a lever, a pointing device, and a keyboard) provided separately from the display 2. In the example illustrated in FIG. 1, the controller 1A includes a computer. The controller 1A may include a plurality of computers that operate in coordination.

In the example illustrated in FIG. 1, the display 2, the inputter 3, the computing apparatus 4, the communication circuit 5, and the memory 6 are coupled to each other via a bus 15. The computing apparatus 4 includes at least one processor 4a (for example, at least one CPU).

The memory 6 includes a storage medium that is readable by the computing apparatus 4. The memory 6 may include, for example, a non-volatile or volatile semiconductor memory such as a RAM, a ROM, and a flash memory. The memory 6 may include a magnetic disk or other forms of memories. The memory 6 stores a program P (for example, a system program PS that runs each application program, the computing program PJ, a machining result generating program PD, a nesting program PN, and a machining program generating program PT). Additionally, the memory 6 stores data such as the at least one machining program PM and the first machining result R1.

The memory 6 may be distributed to a plurality of locations. For example, a memory that stores data may be provided separately from a memory that stores the system program PS.

In the example illustrated in FIG. 10, the memory 6 stores a plurality of schedules including a first schedule CM1 and a second schedule CM2. The first schedule CM1 includes the at least one machining program PM and specifies an execution order of the at least one machining program PM. The second schedule CM2 includes another at least one machining program PM' and specifies an execution order of the other at least one machining program PM'.

The execution of the first schedule CM1 by the computing apparatus 4 is one form of executing the at least one machining program PM by the computing apparatus 4. More specifically, that the computing apparatus 4 executes the first schedule CM1 means executing, by the computing apparatus 4, the at least one machining program PM in accordance with the order specified by the first schedule CM1.

The controller 1A (more specifically, the computing apparatus 4) generates the first control command SA (refer to FIG. 1) by executing the at least one machining program PM (for example, the first schedule CM1), and the communication circuit 5 transmits the first control command SA to the laser beam machine 101. The laser beam machine 101 operates based on the first control command SA and produces a plurality of parts including the first part Q1.

### (Machining Result Creator 41)

In the example illustrated in FIG. 10, the controller 1A (more specifically, the computing apparatus 4) causes the computing apparatus 4 to function as a machining result creator 41 by executing the program P (more specifically, the machining result generating program PD) stored in the memory 6.

The computing apparatus 4 (more specifically, the machining result creator 41) automatically acquires the first machining result R1 indicating the machining result of the first part Q1 produced by the laser beam machine 101 in accordance with the execution of the at least one machining program PM (for example, the first schedule CM1) by the controller 1A (more specifically, the computing apparatus 4). Additionally, the computing apparatus 4 (more specifically, the machining result creator 41) stores the first machining result R1 in the memory 6. The first machining result R1 may be stored in the memory 6 in association with an identifier that identifies the at least one machining program PM (for example, the first schedule CM1) that has been executed.

When the first machining result R1 is automatically acquired by the computing apparatus 4 (more specifically, the machining result creator 41), a workload on the user associated with the inputting of the machining result is reduced. The first machining result R1 may be stored in the memory 6 as a machining result file RF.

The computing apparatus 4 (more specifically, the machining result creator 41) may automatically acquire the second machining result R2 indicating the machining result of the second part Q2 produced by the laser beam machine 101 in accordance with the execution of the at least one machining program PM (for example, the first schedule CM1) by the controller 1A (more specifically, the computing apparatus 4). Additionally, the computing apparatus 4 (more specifically, the machining result creator 41) may store the second machining result R2 in the memory 6. The second machining result R2 may be stored in the memory 6 in association with the identifier that identifies the at least one machining program PM (for example, the first schedule CM1) that has been executed.

When the second machining result R2 is automatically acquired by the computing apparatus 4 (more specifically, the machining result creator 41), a workload on the user associated with the inputting of the machining result is reduced. The second machining result R2 may be stored in the memory 6 as the machining result file RF. The machining result file RF may include data indicating the first machining result R1 and data indicating the second machining result R2.

The computing apparatus 4 (more specifically, the machining result creator 41) may automatically acquire the third machining result R3 indicating the machining result of the third part Q3 produced by the laser beam machine 101 in accordance with the execution of the at least one machining program PM (for example, the first schedule CM1) by the controller 1A (more specifically, the computing apparatus 4). Additionally, the computing apparatus 4 (more specifically, the machining result creator 41) may store the third machining result R3 in the memory 6. The third machining result R3 may be stored in the memory 6 as the machining result file RF. The third machining result R3 may be stored in the memory 6 in association with the identifier that identifies the at least one machining program PM (for example, the first schedule CM1) that has been executed.

When the third machining result R3 is automatically acquired by the computing apparatus 4 (more specifically, the machining result creator 41), a workload on the user associated with the inputting of the machining result is reduced. The third machining result R3 may be stored in the memory 6 as the machining result file RF. The machining result file RF may include data indicating the first machining result R, data indicating the second machining result R2, and data indicating the third machining result R3.

### (First Target Quantity T1, Second Target Quantity T2, and Third Target Quantity T3)

In the description, the quantity of the first part Q1 intended to be produced by the laser beam machine 101 operating based on the first control command SA, which is generated by the execution of the at least one machining program PM (for example, the first schedule CM1) by the computing apparatus 4, is defined as a first target quantity T1. In the description, the quantity of the second part Q2 intended to be produced by the laser beam machine 101 operating based on the first control command SA, which is generated by the execution of the at least one machining program PM (for example, the first schedule CM1) by the computing apparatus 4, is defined as a second target quantity T2. Furthermore, in the description, the quantity of the third part Q3 intended to be produced by the laser beam machine 101 operating based on the first control command SA, which is generated by the execution of the at least one machining program PM (for example, the first schedule CM1) by the computing apparatus 4, is defined as a third target quantity T3.

### (First Machined Quantity M1, Second Machined Quantity M2, and Third Machined Quantity M3)

In the description, the quantity of the first part Q1 produced by the laser beam machine 101 operating based on the first control command SA, which is generated by the execution of the at least one machining program PM (for example, the first schedule CM1) by the computing apparatus 4, is defined as a first machined quantity M1. In the description, the quantity of the second part Q2 produced by the laser beam machine 101 operating based on the first control command SA, which is generated by the execution of the at least one machining program PM (for example, the first schedule CM1) by the computing apparatus 4, is defined as a second machined quantity M2. Furthermore, in the description, the quantity of the third part Q3 produced by the laser beam machine 101 operating based on the first control command SA, which is generated by the execution of the at least one machining program PM (for example, the first schedule CM1) by the computing apparatus 4, is defined as a third machined quantity M3.

In the example illustrated in FIG. 12, the value of the first machined quantity M1 differs from the value of the first target quantity T1. More specifically, the value of the first machined quantity M1 is smaller than the value of the first target quantity T1. A reason why the value of the first machined quantity M1 differs from the value of the first target quantity T1 will be described.

For example, the laser beam machine 101 sometimes temporarily stops due to occurrence of a machining defect. In this case, the execution of the at least one machining program PM by the computing apparatus 4 is interrupted, and the laser beam machine 101 is unable to fully execute the first control command SA. When the execution of the at least one machining program PM is resumed after cutting off a machining defect part, the length of the workpiece as material is shortened by the cutting off. Therefore, there is a possibility that the required quantity of the first part Q1 is unable to be produced from the workpiece. As described above, due to factors such as that the execution of the at least one machining program PM is interrupted or that the machining defect part is cut off from the workpiece, the value of the first machined quantity M1 can become smaller than the value of the first target quantity T1.

### (First Unmachined Quantity U1, Second Unmachined Quantity U2, and Third Unmachined Quantity U3)

In the description, the difference between the first target quantity T1 and the first machined quantity M1 is defined as a first unmachined quantity U1. In other words, the first unmachined quantity U1 indicates the difference between the first target quantity T1 and the first machined quantity M1. In the description, the difference between the second target quantity T2 and the second machined quantity M2 is defined as a second unmachined quantity U2. In other words, the second unmachined quantity U2 indicates the difference between the second target quantity T2 and the second machined quantity M2. Furthermore, in the description, the difference between the third target quantity T3 and the third machined quantity M3 is defined as a third unmachined quantity U3. In other words, the third unmachined quantity U3 indicates the difference between the third target quantity T3 and the third machined quantity M3.

### (First Defective Part Quantity D1, Second Defective Part Quantity D2, and Third Defective Part Quantity D3)

There are cases in which the first part Q1, the second part Q2, or the third part Q3, each of which is produced by the laser beam machine 101 operating based on the first control command SA, is determined as a defective part in an inspection. The inspection is performed manually (for example, the user inspects whether the produced first part Q1, the produced second part Q2, or the produced third part Q3 satisfies a requested criteria visually or by using a tool such as a vernier caliper. The inspection may be performed automatically using, for example, a camera.

In the description, the quantity of the defective part of the first part Q1 produced by the laser beam machine 101 operating based on the first control command SA, which is generated by the execution of the at least one machining program PM by the computing apparatus 4, is defined as the first defective part quantity D1 (refer to FIG. 14). More specifically, the quantity of the first part Q1 determined to be a defective part in the inspection out of first parts Q1 produced by the laser beam machine 101 operating based on the first control command SA is defined as the first defective part quantity D1.

In the description, the quantity of the defective part of the second part Q2 produced by the laser beam machine 101 operating based on the first control command SA, which is generated by the execution of the at least one machining program PM by the computing apparatus 4, is defined as the second defective part quantity D2 (refer to FIG. 14). Furthermore, in the description, the quantity of the defective part of the third part Q3 produced by the laser beam machine 101 operating based on the first control command SA, which is generated by the execution of the at least one machining program PM by the computing apparatus 4, is defined as the third defective part quantity D3 (refer to FIG. 14).

The first machined quantity M1 (refer to FIG. 12) may be corrected based on the first defective part quantity D1. For example, when the value of the first defective part quantity D1 is K1 (note that, K1 is a natural number, and the same applies to the following), the computing apparatus 4 (more specifically, the machining result creator 41) may automatically correct the first machined quantity M1 to reduce the value of the first machined quantity M1 by K1 (refer to FIG. 14). The second machined quantity M2 (refer to FIG. 12) may be corrected based on the second defective part quantity D2. For example, when the value of the second defective part quantity D2 is K2 (note that, K2 is a natural number, and the same applies to the following), the computing apparatus 4 (more specifically, the machining result creator 41) may automatically correct the second machined quantity M2 to reduce the value of the second machined quantity M2 by K2 (refer to FIG. 14). The third machined quantity M3 (refer to FIG. 12) may be corrected based on the third defective part quantity D3. For example, when the value of the third defective part quantity D3 is K3 (note that, K3 is a natural number, and the same applies to the following), the computing apparatus 4 (more specifically, the machining result creator 41) may automatically correct the third machined quantity M3 to reduce the value of the third machined quantity M3 by K3.

In the example illustrated in FIGs. 12 and 14, while the first machined quantity M1 is corrected based on the first defective part quantity D1, the first unmachined quantity U1 is not corrected based on the first defective part quantity D1. In other words, the first unmachined quantity U1 is maintained at a value indicating the difference between the first target quantity T1 and the first machined quantity M1 before the correction. Alternatively, the first unmachined quantity U1 may be corrected based on the first defective part quantity D1. For example, when the value of the first defective part quantity D1 is K1, the computing apparatus 4 (more specifically, the machining result creator 41) may automatically correct the first unmachined quantity U1 to increase the value of the first unmachined quantity U1 by K1. In this case, the first unmachined quantity U1 after the correction is the total value of the first unmachined quantity U1 before the correction and the first defective part quantity D1.

### (First Identifier F1, Second Identifier F2, and Third Identifier F3)

In the description, the identifier that identifies the first part Q1 is defined as a first identifier F1. The first identifier F1 may be a part name of the first part Q1, a symbol string identifying the first part Q1 (where the symbol string includes at least one of a letter, a number, and a symbol), or a figure identifying the first part Q1 (for example, a figure modeling the first part Q1). In the description, the identifier that identifies the second part Q2 is defined as a second identifier F2. The second identifier F2 may be a part name of the second part Q2, a symbol string identifying the second part Q2, or a figure identifying the second part Q2. Additionally, in the description, the identifier that identifies the third part Q3 is defined as a third identifier F3. The third identifier F3 may be a part name of the third part Q3, a symbol string identifying the third part Q3, or a figure identifying the third part Q3.

### (First Machining Result R1, Second Machining Result R2, and Third Machining Result R3)

In the example illustrated in FIG. 10, the first machining result R1 is stored in the memory 6. The first machining result R1 indicates the machining result of the first part Q1 produced by the laser beam machine 101 operating based on the first control command SA. The first machining result R1 stored in the memory 6 may include first identification information 61-1 (for example, the first identifier F1) that identifies the first part Q1, and the above-described first machined quantity M1. Additionally, the first machining result R1 stored in the memory 6 may include the above-described first unmachined quantity U1 (more specifically, the first unmachined quantity U1 indicating the difference between the first target quantity T1 and the first machined quantity M1).

In the example illustrated in FIGs. 3 and 12, the first machining result R1 (in other words, the machining result of the first part Q1) displayed on the display 2 includes the first identifier F1 identifying the first part Q1 and the above-described first machined quantity M1. As illustrated in FIG. 12, the first machining result R1 displayed on the display 2 may include the first identifier F1 identifying the first part Q1 and the above-described first unmachined quantity U1 (more specifically, the first unmachined quantity U1 indicating the difference between the first target quantity T1 and the first machined quantity M1). Additionally, the first machining result R1 displayed on the display 2 may include the first target quantity T1. In the example illustrated in FIG. 12, the first machining result R1 displayed on the display 2 includes the first identifier F1, the first target quantity T1, the first machined quantity M1, and the first unmachined quantity U1.

In the example illustrated in FIG. 10, the second machining result R2 is stored in the memory 6. The second machining result R2 indicates the machining result of the second part Q2 produced by the laser beam machine 101 operating based on the first control command SA. The second machining result R2 stored in the memory 6 may include second identification information 61-2 (for example, the second identifier F2) that identifies the second part Q2, and the above-described second machined quantity M2. Additionally, the second machining result R2 stored in the memory 6 may include the above-described second unmachined quantity U2.

In the example illustrated in FIGs. 3 and 12, the second machining result R2 displayed on the display 2 (in other words, the machining result of the second part Q2) includes the second identifier F2 identifying the second part Q2 and the above-described second machined quantity M2. As illustrated in FIG. 12, the second machining result R2 displayed on the display 2 may include the second identifier F2 identifying the second part Q2 and the above-described second unmachined quantity U2. Additionally, the second machining result R2 displayed on the display 2 may include the second target quantity T2. In the example illustrated in FIG. 12, the second machining result R2 displayed on the display 2 includes the second identifier F2, the second target quantity T2, the second machined quantity M2, and the second unmachined quantity U2.

In the example illustrated in FIG. 10, the third machining result R3 is stored in the memory 6. The third machining result R3 indicates the machining result of the third part Q3 produced by the laser beam machine 101 operating based on the first control command SA. The third machining result R3 stored in the memory 6 may include third identification information 61-3 (for example, the third identifier F3) that identifies the third part Q3 and the above-described third machined quantity M3. Additionally, the third machining result R3 stored in the memory 6 may include the above-described third unmachined quantity U3.

In the example illustrated in FIGs. 3 and 12, the third machining result R3 displayed on the display 2 (in other words, the machining result of the third part Q3) includes the third identifier F3 identifying the third part Q3 and the above-described third machined quantity M3. As illustrated in FIG. 12, the third machining result R3 displayed on the display 2 may include the third identifier F3 identifying the third part Q3 and the above-described third unmachined quantity U3. Additionally, the third machining result R3 displayed on the display 2 may include the third target quantity T3. In the example illustrated in FIG. 12, the third machining result R3 displayed on the display 2 includes the third identifier F3, the third target quantity T3, the third machined quantity M3, and the third unmachined quantity U3.

As illustrated in FIG. 12, when the first machining result R1 displayed on the display 2 includes the first unmachined quantity U1, it is possible for the user to easily grasp a shortage quantity from the first target quantity indicating the originally intended production quantity of the first part Q1. As illustrated in FIG. 12, when the second machining result R2 displayed on the display 2 includes the second unmachined quantity U2, it is possible for the user to easily grasp a shortage quantity from the second target quantity indicating the originally intended production quantity of the second part Q2. As illustrated in FIG. 12, when the third machining result R3 displayed on the display 2 includes the third unmachined quantity U3, it is possible for the user to easily grasp a shortage quantity from the third target quantity indicating the originally intended production quantity of the third part Q3.

In the example illustrated in FIGs. 3 and 12, the display 2 displays machining result data including the first machining result R1 and the second machining result R2 in list format. More specifically, the display 2 displays the machining result data including the first machining result R1 and the second machining result R2 in list format such that the plurality of identifiers (F1, F2, and so on) of the plurality of parts are arranged in a column direction (in other words, a vertical direction) and pieces of the machining result data of each part are arranged in the same line.

### (First Input Field 22-1, Second Input Field 22-2, and Third Input Field 22-3)

In the example illustrated in FIG. 12, the display 2 displays a first input field 22-1 that is an input field of the first defective part quantity D1. More specifically, the display 2 displays the first machining result R1 and the first input field 22-1, which is the input field of the first defective part quantity D1, at the same time. The display 2 may display the second machining result R2 and a second input field 22-2 that is an input field of the second defective part quantity D2 at the same time. Additionally, the display 2 may display the third machining result R3 and a third input field 22-3 that is an input field of the third defective part quantity D3 at the same time.

In the example illustrated in FIG. 12, the first input field 22-1, the second input field 22-2, and the third input field 22-3 are each a selection input field configured to allow a number to be selected from a plurality of numbers displayed in a list (refer to FIG. 13 if necessary). Alternatively, the first input field 22-1, the second input field 22-2, and the third input field 22-3 may each be an input field of other format (for example, a direct entry input field in which the user directly inputs a number).

In the example illustrated in FIG. 12, when the value of the first defective part quantity D1 input in the computing apparatus 4 via the inputter 3 is K1 (in other words, when the value of the first defective part quantity D1 input in the first input field 22-1 is K1), the computing apparatus 4 (more specifically, the machining result creator 41) automatically corrects the first machined quantity M1 to reduce the value of the first machined quantity M1 by K1. Additionally, the display 2 displays the first machined quantity M1 that has been corrected as at least part of the first machining result R1 (refer to FIG. 14).

When the computing apparatus 4 corrects, based on the first defective part quantity D1 input via the inputter 3, the first machined quantity M1 indicating the quantity of the first part Q1 that has been produced, the first machined quantity M1 that has been corrected is to indicate a good part quantity of the first part Q1 that has been produced. It is therefore possible for the user to easily grasp the good part quantity of the first part Q1.

Alternatively or additionally, when the value of the first defective part quantity D1 input in the computing apparatus 4 via the inputter 3 is K1, the computing apparatus 4 (more specifically, the machining result creator 41) may automatically correct the first quantity V1 to increase the value of the first quantity V1 by K1. Additionally, the display 2 may display the first quantity V1 that has been corrected (refer to FIG. 14). Note that, in the example illustrated in FIGs. 12 and 14, the inputting of the first defective part quantity D1 is one form of inputting the first instruction to change the first quantity V1 (in other words, the user inputting the first defective part quantity D1 via the inputter 3 is one form of the user inputting the first instruction to change the first quantity V1 via the inputter 3).

When the computing apparatus 4 corrects the first quantity V1, based on the first defective part quantity D1, the first quantity V1 is to be automatically corrected in response to the input of the first defective part quantity D1. This decreases the input burden on the user to instruct additional production of the first part Q 1.

In the example illustrated in FIG. 12, when the value of the second defective part quantity D2 input in the computing apparatus 4 via the inputter 3 is K2 (more specifically, when the value of the second defective part quantity D2 input in the second input field 22-2 is K2), the computing apparatus 4 (more specifically, the machining result creator 41) may automatically correct the second machined quantity M2 to reduce the value of the second machined quantity M2 by K2. Additionally, the display 2 may display the second machined quantity M2 that has been corrected as at least part of the second machining result R2 (refer to FIG. 14).

When the computing apparatus 4 corrects, based on the second defective part quantity D2 input via the inputter 3, the second machined quantity M2 indicating the quantity of the second part Q2 that has been produced, the second machined quantity M2 that has been corrected is to indicate a good part quantity of the second part Q2 that has been produced. It is therefore possible for the user to easily grasp the good part quantity of the second part Q2.

Alternatively or additionally, when the value of the second defective part quantity D2 input in the computing apparatus 4 via the inputter 3 is K2, the computing apparatus 4 (more specifically, the machining result creator 41) may automatically correct the second quantity V2 to increase the value of the second quantity V2 by K2. Additionally, the display 2 may display the second quantity V2 that has been corrected (refer to FIG. 14). Note that, in the example illustrated in FIGs. 12 and 14, the inputting of the second defective part quantity D2 is one form of inputting the second instruction to change the second quantity V2 (in other words, the user inputting the second defective part quantity D2 via the inputter 3 is one form of the user inputting the second instruction to change the second quantity V2 via the inputter 3).

When the computing apparatus 4 corrects the second quantity V2, based on the second defective part quantity D2, the second quantity V2 is to be automatically corrected in response to the input of the second defective part quantity D2. This decreases the input burden on the user to instruct additional production of the second part Q2.

In the example illustrated in FIG. 12, when the value of the third defective part quantity D3 input in the computing apparatus 4 via the inputter 3 is K3 (more specifically, when the value of the third defective part quantity D3 input in the third input field 22-3 is K3), the computing apparatus 4 (more specifically, the machining result creator 41) may automatically correct the third machined quantity M3 to reduce the value of the third machined quantity M3 by K3. Additionally, the display 2 may display the third machined quantity M3 that has been corrected as at least part of the third machining result R3.

When the computing apparatus 4 corrects, based on the third defective part quantity D3 input via the inputter 3, the third machined quantity M3 indicating the quantity of the third part Q3 that has been produced, the third machined quantity M3 that has been corrected is to indicate a good part quantity of the third part Q3 that has been produced. It is therefore possible for the user to easily grasp the good part quantity of the third part Q3.

Alternatively or additionally, when the value of the third defective part quantity D3 input in the computing apparatus 4 via the inputter 3 is K3, the computing apparatus 4 (more specifically, the machining result creator 41) may automatically correct the third quantity V3 to increase the value of the third quantity V3 by K3. Additionally, the display 2 may display the third quantity V3 that has been corrected.

When the computing apparatus 4 corrects the third quantity V3, based on the third defective part quantity D3, the third quantity V3 is to be automatically corrected in response to the input of the third defective part quantity D3. This decreases the input burden on the user to instruct additional production of the third part Q3.

### (Default Value of First Quantity V1, Default Value of Second Quantity V2, and Default Value of Third Quantity V3)

In the example illustrated in FIG. 12, the display 2 displays a value indicating the first unmachined quantity U1 (in other words, a value indicating the difference between the first target quantity T1 and the first machined quantity M1) as a default value DF1 of the first quantity V1.

When the value indicating the first unmachined quantity U1 is displayed as the default value DF1 of the first quantity V1, it is possible for the user to easily grasp the shortage quantity from the first target quantity T1 indicating the originally intended production quantity of the first part Q1. Additionally, because the value indicating the shortage quantity of the first part Q1 is set as the default value DF1 of the first quantity V1, it is possible for the user to promptly advance the procedure for producing the first part Q1 by the quantity corresponding to the shortage quantity.

In the example illustrated in FIG. 12, when the value of the first defective part quantity D1 input in the computing apparatus 4 via the inputter 3 is K1, the computing apparatus 4 (more specifically, the machining result creator 41) may automatically correct the first quantity V1 to increase the value of the first quantity V1 by K1 from the default value DF1. Additionally, the display 2 may display the first quantity V1 that has been corrected (refer to FIG. 14).

In the example illustrated in FIGs. 12 and 14, when the value of the first defective part quantity D1 input in the computing apparatus 4 via the inputter 3 is K1, the computing apparatus 4 (more specifically, the machining result creator 41) automatically corrects the first quantity V1 such that the value of the first quantity V1 becomes equal to the total value of the value indicating the first unmachined quantity U1 and the value indicating the first defective part quantity D1. In this case, it is possible for the user to promptly advance the procedure for producing the first part Q1 by the quantity corresponding to the total of the shortage quantity of the first part Q1 and the defective part quantity of the first part Q1.

In the example illustrated in FIG. 12, the display 2 displays a value indicating the second unmachined quantity U2 (in other words, a value indicating the difference between the second target quantity T2 and the second machined quantity M2) as a default value DF2 of the second quantity V2.

When the value indicating the second unmachined quantity U2 is displayed as the default value DF2 of the second quantity V2, it is possible for the user to easily grasp the shortage quantity from the second target quantity T2 indicating the originally intended production quantity of the second part Q2. Additionally, because the value indicating the shortage quantity of the second part Q2 is set as the default value DF2 of the second quantity V2, it is possible for the user to promptly advance the procedure for producing the second part Q2 by the quantity corresponding to the shortage quantity.

In the example illustrated in FIG. 12, when the value of the second defective part quantity D2 input in the computing apparatus 4 via the inputter 3 is K2, the computing apparatus 4 (more specifically, the machining result creator 41) may automatically correct the second quantity V2 to increase the value of the second quantity V2 by K2 from the default value DF2. Additionally, the display 2 may display the second quantity V2 that has been corrected (refer to FIG. 14).

In the example illustrated in FIGs. 12 and 14, when the value of the second defective part quantity D2 input in the computing apparatus 4 via the inputter 3 is K2, the computing apparatus 4 (more specifically, the machining result creator 41) automatically corrects the second quantity V2 such that the value of the second quantity V2 becomes equal to the total value of the value indicating the second unmachined quantity U2 and the value indicating the second defective part quantity D2. In this case, it is possible for the user to promptly advance the procedure for producing the second part Q2 by the quantity corresponding to the total of the shortage quantity of the second part Q2 and the defective part quantity of the second part Q2.

In the example illustrated in FIG. 12, the display 2 displays a value indicating the third unmachined quantity U3 (in other words, a value indicating the difference between the third target quantity T3 and the third machined quantity M3) as a default value DF3 of the third quantity V3.

When the value indicating the third unmachined quantity U3 is displayed as the default value DF3 of the third quantity V3, it is possible for the user to easily grasp the shortage quantity from the third target quantity T3 indicating the originally intended production quantity of the third part Q3. Additionally, because the value indicating the shortage quantity of the third part Q3 is set as the default value DF3 of the third quantity V3, it is possible for the user to promptly advance the procedure for producing the third part Q3 by the quantity corresponding to the shortage quantity.

In the example illustrated in FIG. 12, when the value of the third defective part quantity D3 input in the computing apparatus 4 via the inputter 3 is K3, the computing apparatus 4 (more specifically, the machining result creator 41) may automatically correct the third quantity V3 to increase the value of the third quantity V3 by K3 from the default value DF3. Additionally, the display 2 may display the third quantity V3 that has been corrected.

In the example illustrated in FIGs. 3 and 12, the display 2 displays the input field for the first quantity V1 (that is, the first quantity input field 21-1). In the example illustrated in FIGs. 3 and 12, it is possible for the user to directly input the first quantity V1 in the first quantity input field 21-1 displayed on the display 2 via the inputter 3.

In the example illustrated in FIGs. 3 and 12, the display 2 displays the first machining result R1 and the first quantity input field 21-1, which is a direct input field of the first quantity V1, at the same time. As illustrated in FIG. 12, the display 2 may display the first machining result R1, the first input field 22-1, which is the input field of the first defective part quantity D1, and the first quantity input field 21-1, which is the direct input field of the first quantity V1, at the same time.

In the example illustrated in FIG. 12, the display 2 displays, in the first quantity input field 21-1, a value indicating the first unmachined quantity U1 (in other words, a value indicating the difference between the first target quantity T1 and the first machined quantity M1) as the default value DF1 of the first quantity V1. As illustrated in FIG. 14, the value displayed in the first quantity input field 21-1 may be configured to be automatically changed from the value indicating the first unmachined quantity U1 to the value indicating the total value of the value indicating the first unmachined quantity U1 and the value indicating the first defective part quantity D1 in response to the first defective part quantity D1 being input in the computing apparatus 4 via the inputter 3.

In the example illustrated in FIG. 12 or 14, it is possible for the user to directly edit the value displayed in the first quantity input field 21-1 as the value indicating the first quantity V1. In other words, it is possible for the user to, by directly editing the value displayed in the first quantity input field 21-1, change from the value displayed in the first quantity input field 21-1 as the value indicating the first quantity V1 (for example, the default value DF1 illustrated in FIG. 12 or the total value of the value indicating the first unmachined quantity U1 and the value indicating the first defective part quantity D1 illustrated in FIG. 14) to another value desired by the user (refer to FIG. 15). In this case, it is possible for the user to freely determine the first quantity V1, which is the additional order quantity of the first part Q1, while referring to the value automatically presented by the computing apparatus 4.

In the example illustrated in FIGs. 3 and 12, the display 2 displays the input field of the second quantity V2 (hereinafter, referred to as a "second quantity input field 21-2"). In the example illustrated in FIGs. 3 and 12, it is possible for the user to directly input the second quantity V2 in the second quantity input field 21-2 displayed on the display 2 via the inputter 3.

In the example illustrated in FIGs. 3 and 12, the display 2 displays the second machining result R2 and the second quantity input field 21-2, which is a direct input field of the second quantity V2, at the same time. As illustrated in FIG. 12, the display 2 may display the second machining result R2, the second input field 22-2, which is the input field of the second defective part quantity D2, and the second quantity input field 21-2, which is the direct input field of the second quantity V2, at the same time.

In the example illustrated in FIG. 12, the display 2 displays, in the second quantity input field 21-2, a value indicating the second unmachined quantity U2 (in other words, a value indicating the difference between the second target quantity T2 and the second machined quantity M2) as the default value DF2 of the second quantity V2. As illustrated in FIG. 14, the value displayed in the second quantity input field 21-2 may be configured to be automatically changed from the value indicating the second unmachined quantity U2 to the value indicating the total value of the value indicating the second unmachined quantity U2 and the value indicating the second defective part quantity D2 in response to the second defective part quantity D2 being input in the computing apparatus 4 via the inputter 3.

In the example illustrated in FIG. 12 or 14, it is possible for the user to directly edit the value displayed in the second quantity input field 21-2 as the value indicating the second quantity V2. In other words, it is possible for the user to, by directly editing the value displayed in the second quantity input field 21-2, change from the value displayed in the second quantity input field 21-2 as the value indicating the second quantity V2 (for example, the default value DF2 illustrated in FIG. 12 or the total value of the value indicating the second unmachined quantity U2 and the value indicating the second defective part quantity D2 illustrated in FIG. 14) to another value desired by the user. In this case, it is possible for the user to freely determine the second quantity V2, which is the additional order quantity of the second part Q2, while referring to the value automatically presented by the computing apparatus 4.

In the example illustrated in FIGs. 3 and 12, the display 2 displays the input field of the third quantity V3 (hereinafter referred to as a "third quantity input field 21-3"). In the example illustrated in FIGs. 3 and 12, it is possible for the user to directly input the third quantity V3 in the third quantity input field 21-3 displayed on the display 2 via the inputter 3.

In the example illustrated in FIGs. 3 and 12, the display 2 displays the third machining result R3 and the third quantity input field 21-3, which is a direct input field of the third quantity V3, at the same time. As illustrated in FIG. 12, the display 2 may display the third machining result R3, the third input field 22-3, which is the input field of the third defective part quantity D3, and the third quantity input field 21-3, which is the direct input field of the third quantity V3, at the same time.

In the example illustrated in FIG. 12, the display 2 displays, in the third quantity input field 21-3, a value indicating the third unmachined quantity U3 (in other words, a value indicating the difference between the third target quantity T3 and the third machined quantity M3) as the default value DF3 of the third quantity V3. The value displayed in the third quantity input field 21-3 may be configured to be automatically changed from the value indicating the third unmachined quantity U3 to the value indicating the total value of the value indicating the third unmachined quantity U3 and the value indicating the third defective part quantity D3 in response to the third defective part quantity D3 being input in the computing apparatus 4 via the inputter 3.

In the example illustrated in FIG. 12 or 14, it is possible for the user to directly edit the value displayed in the third quantity input field 21-3 as the value indicating the third quantity V3. In other words, it is possible for the user to, by directly editing the value displayed in the third quantity input field 21-3, change from the value displayed in the third quantity input field 21-3 as the value indicating the third quantity V3 (for example, the default value DF3 illustrated in FIG. 12 or the total value of the value indicating the third unmachined quantity U3 and the value indicating the third defective part quantity D3 illustrated in FIG. 14) to another value desired by the user (refer to FIG. 15). In this case, it is possible for the user to freely determine the third quantity V3, which is the additional order quantity of the third part Q3, while referring to the value automatically presented by the computing apparatus 4.

### (First Image M1)

The computing apparatus 4 executes a process (hereinafter, referred to as a "third process") of generating a first display command by executing the program P (for example, the machining result generating program PD) stored in the memory 6, and the display 2 that receives the first display command from the computing apparatus 4 displays a first image IM1 (refer to FIG. 11). The first display command is a command that causes the display 2 to display the machining result, and the first image IM1 is an image including the machining result.

In the example illustrated in FIG. 12, the first image IM1 displayed on the display 2 includes the above-described first machining result R1 (for example, the first identifier F1 identifying the first part Q1, the first target quantity T1, the first machined quantity M1, and/or the first unmachined quantity U1). The first image IM1 may include the above-described first input field 22-1 and/or the above-described first quantity input field 21-1.

Additionally, the first image IM1 displayed on the display 2 may include a first selection field 24-1 that accepts selection of whether to place an additional order of the first part Q1. In the example illustrated in FIG. 16, it is possible for the user to select whether to place an additional order of the first part Q1 by operating the first selection field 24-1 displayed on the display 2 via the inputter 3 (more specifically, by touching or clicking the first selection field 24-1).

The first image IM1 displayed on the display 2 may include the above-described second machining result R2 (for example, the second identifier F2 identifying the second part Q2, the second target quantity T2, the second machined quantity M2, and/or the second unmachined quantity U2). Additionally, the first image IM1 may include the above-described second input field 22-2 and/or the above-described second quantity input field 21-2.

Additionally, the first image IM1 displayed on the display 2 may include a second selection field 24-2 that accepts selection of whether to place an additional order of the second part Q2. In the example illustrated in FIG. 16, it is possible for the user to select whether to place an additional order of the second part Q2 by operating the second selection field 24-2 displayed on the display 2 via the inputter 3 (more specifically, by touching or clicking the second selection field 24-2).

The first image IM1 displayed on the display 2 may include the above-described third machining result R3 (for example, the third identifier F3 identifying the third part Q3, the third target quantity T3, the third machined quantity M3, and/or the third unmachined quantity U3). Additionally, the first image IM1 may include the above-described third input field 22-3 and/or the above-described third quantity input field 21-3.

Additionally, the first image IM1 displayed on the display 2 may include a third selection field 24-3 that accepts selection of whether to place an additional order of the third part Q3. In the example illustrated in FIG. 16, it is possible for the user to select whether to place an additional order of the third part Q3 by operating the third selection field 24-3 displayed on the display 2 via the inputter 3 (more specifically, by touching or clicking the third selection field 24-3).

In the example illustrated in FIG. 11, the first image IM1 displayed on the display 2 includes a plurality of schedule identifiers C including a first schedule identifier C1 identifying the first schedule CM1 and a second schedule identifier C2 identifying the second schedule CM2. The first image IM1 may include the first schedule identifier C1, data CT1 indicating the date and time at which the first schedule CM1 is executed, the second schedule identifier C2, and data CT2 indicating the date and time at which the second schedule CM2 is executed.

In the example illustrated in FIG. 11, in response to the first schedule identifier C1 being selected out of the plurality of schedule identifiers C displayed on the display 2, the computing apparatus 4 generates the first display command such that the first image IM1 includes the machining results (for example, the first machining result R1, the second machining result R2, and/or the third machining result R3, as described above) of the parts produced by the laser beam machine 101, based on the execution of the first schedule CM1. The display 2 that receives the first display command displays, as part of the first image IM1, the machining results of the parts produced by the laser beam machine 101, based on the execution of the first schedule CM1.

In the example illustrated in FIG. 11, the first image IM1 displayed on the display 2 includes the plurality of part type identifiers F including the first identifier F1 identifying the first part Q1 and the second identifier F2 identifying the second part Q2.

In the example illustrated in FIG. 11, in response to the first identifier F1 being selected out of the plurality of part type identifiers F displayed on the display 2, the computing apparatus 4 generates the first display command such that the first image IM1 includes a modeling image 81 that models the first part Q1 identified by the first identifier F1, and/or dimension data 91 of the first part Q1 identified by the first identifier F1. The display 2 that receives the first display command displays, as part of the first image IM1, the modeling image 81 that models the first part Q1 and/or the dimension data 91 of the first part Q1.

In the example illustrated in FIG. 17, in response to the second identifier F2 being selected out of the plurality of part type identifiers F displayed on the display 2, the computing apparatus 4 generates the first display command such that the first image IM1 includes a modeling image 82 that models the second part Q2 identified by the second identifier F2, and/or dimension data 92 of the second part Q2 identified by the second identifier F2. The display 2 that receives the first display command displays, as part of the first image IM1, the modeling image 82 that models the second part Q2 and/or the dimension data 92 of the second part Q2.

### (First Save Button 25)

In the example illustrated in FIG. 17, the first image IM1 includes a first save button 25 (more specifically, an image of the first save button 25). In response to the first save button 25 being touched or clicked, data that is input in the input field included in the first image IM1 (for example, the first input field 22-1, the first quantity input field 21-1, the second input field 22-2, the second quantity input field 21-2, the third input field 22-3, the third quantity input field 21-3, etc.) is stored in the memory 6. Additionally, in response to the first save button 25 being touched or clicked, the first machined quantity M1 corrected in accordance with the input of the first defective part quantity D1 may be stored in the memory 6. Additionally, in response to the first save button 25 being touched or clicked, the second machined quantity M2 corrected in accordance with the input of the second defective part quantity D2 and/or the third machined quantity M3 corrected in accordance with the input of the third defective part quantity D3 may be stored in the memory 6.

In the example illustrated in FIG. 17, the first defective part quantity D1 and/or the first quantity V1 is stored in the memory 6 in response to the first save button 25 being touched or clicked. Alternatively or additionally, the first defective part quantity D1 may be stored in the memory 6 in response to the first defective part quantity D1 being input in the first input field 22-1. Alternatively, in response to the first quantity V1 being input in the first quantity input field 21-1 or the first quantity V1 displayed in the first quantity input field 21-1 being changed, the first quantity V1 that has been input or changed may be stored in memory 6.

In the example illustrated in FIG. 17, in response to the first save button 25 being touched or clicked, the second defective part quantity D2 and/or the second quantity V2 is stored in the memory 6. Alternatively or additionally, in response to the second defective part quantity D2 being input in the second input field 22-2, the second defective part quantity D2 may be stored in the memory 6. Alternatively, in response to the second quantity V2 being input in the second quantity input field 21-2 or the second quantity V2 displayed in the second quantity input field 21-2 being changed, the second quantity V2 that has been input or changed may be stored in the memory 6.

In the example illustrated in FIG. 17, in response to the first save button 25 being touched or clicked, the third defective part quantity D3 and/or the third quantity V3 is stored in the memory 6. Alternatively or additionally, in response to the third defective part quantity D3 being input in the third input field 22-3, the third defective part quantity D3 may be stored in the memory 6. Alternatively, in response to the third quantity V3 being input in the third quantity input field 21-3 or the third quantity V3 displayed in the third quantity input field 21-3 being changed, the third quantity V3 that has been input or changed may be stored in the memory 6.

In the example illustrated in FIG. 18, the memory 6 stores additional order data V including, for example, the first quantity V1, the second quantity V2, and the third quantity V3, and inspection data D including, for example, the first defective part quantity D1, the second defective part quantity D2, and the third defective part quantity D3 in addition to the machining result data R including, for example, the first machining result R1, the second machining result R2, and the third machining result R3.

In the example illustrated in FIG. 18, the memory 6 stores first part data 62-1 that specifies the dimension of the first part Q1, second part data 62-2 that specifies the dimension of the second part Q2, and third part data 62-3 that specifies the dimension of the third part Q3. More specifically, the first part data 62-1 is stored in the memory 6 in association with the first identification information 61-1 (for example, the first identifier F1) identifying the first part Q1. The second part data 62-2 is stored in the memory 6 in association with the second identification information 61-2 (for example, the second identifier F2) identifying the second part Q2. Additionally, the third part data 62-3 is stored in the memory 6 in association with the third identification information 61-3 (for example, the third identifier F3) identifying the third part Q3.

### (Order List LT)

As illustrated in FIG. 20, the order list LT may be generated that includes the part type identifiers F identifying the plurality of part types that have been additionally ordered, and the additional order quantity of each of the plurality of part types that have been additionally ordered. The order list LT that has been generated is preferably displayed on the display 2. The generation of the order list LT is executed by, for example, the controller 1A (more specifically, the computing apparatus 4).

FIG. 19 illustrates the image IN2 (more specifically, a second button BN2) that accepts a start instruction for generating the order list. In the example illustrated in FIG. 19, the first image IM1 includes the image IN2 (more specifically, the second button BN2) that accepts the start instruction for generating the order list. In the example illustrated in FIG. 19, in response to the image IN2 (more specifically, the second button BN2) that accepts the start instruction for generating the order list being touched or clicked, the controller 1A (more specifically, the computing apparatus 4) generates the above-described order list LT. Additionally, the controller 1A (more specifically, the computing apparatus 4) causes a second image IM2 including the order list LT that has been generated to be displayed on the display 2.

The image IN2 (more specifically, the second button BN2) that accepts the start instruction for generating the order list may be configured to, in response to the first save button 25 of the first image IM1 being touched or clicked, be displayed on the display 2 or changed in the display state to an active state that accepts user input (refer to FIGs. 17 and 19).

In the example illustrated in FIG. 20, the order list LT includes the first identifier F1 identifying the first part Q1 as one part type and the above-described first quantity V1. The order list LT may include the second identifier F2 identifying the second part Q2 as one part type and the above-described second quantity V2. Additionally, the order list LT may include the third identifier F3 identifying the third part Q3 as one part type and the above-described third quantity V3.

As illustrated in FIG. 20, the display 2 may display the modeling image 81 that models the first part Q1 and/or the dimension data 91 of the first part Q1 in addition to the order list LT in response to the first part Q1 being selected in the order list LT (more specifically, in response to the first identifier F1 identifying the first part Q1 in the order list LT being selected).

The second image IM2 may include a field 26-1 that accepts correction of the first quantity V1. In the example illustrated in FIG. 20, when a number is input in the field 26-1 via the inputter 3, the value of the first quantity V1 is changed to the number input in the field 26-1. The second image IM2 may include a field that accepts correction of the second quantity V2.

The second image IM2 may include a button (hereinafter, referred to as a "third button BN3") for proceeding to a process of setting nesting conditions. In a case where, for example, the generation of the order list LT is omitted, the first image IM1 may include the third button BN3 for proceeding to the process of setting the nesting conditions.

### (Setting of Nesting Conditions)

The controller 1A (more specifically, the computing apparatus 4) executes the process of setting the nesting conditions using the display 2 and the inputter 3 by executing the program P.

The nesting conditions include, for example, the dimension of the workpiece W (for example, the length of the workpiece W). Note that, when the at least one workpiece W includes a plurality of workpieces W that have different shapes, the nesting conditions include the dimension of each of the plurality of workpieces W. Hereinafter, to avoid complexity in the description, an example case where the at least one workpiece W is one workpiece or a plurality of workpieces that have the same shape will be described.

In the example illustrated in FIG. 21, the display 2 displays at least one input field 27 for setting the nesting conditions. More specifically, the computing apparatus 4 generates a display command by executing the program P stored in the memory 6, and the display 2 that receives the display command from the computing apparatus 4 displays an image (hereinafter, referred to as a "third image IM3") including the at least one input field 27.

The third image IM3 including the at least one input field 27 may be displayed on the display 2 in response to the third button BN3 (refer to FIG. 20) being touched or clicked. The third image IM3 (refer to FIG. 21) and the second image IM2 (refer to FIG. 20) may be displayed on the display 2 at the same time.

The at least one input field 27 may include a dimension input field 27-1 that accepts input of the data that specifies the dimension of the workpiece W. In the example illustrated in FIG. 21, the dimension input field 27-1 is a field that accepts input of the data specifying the length of the workpiece W. Alternatively or additionally, the at least one input field 27 may include a field 27-2 that accepts input of the data specifying the length of a margin at an edge portion of the workpiece W. Note that, the margin means a portion not to be used to produce a part.

The controller 1A (more specifically, the computing apparatus 4) sets the nesting conditions based on the data that is input in the at least one input field 27. For example, the controller 1A (more specifically, the computing apparatus 4) sets the dimension of the workpiece W that constitutes at least part of the nesting conditions, based on the data that is input in the dimension input field 27-1. Data 94 (refer to FIG. 18) indicating the dimension of the workpiece W is stored in the memory 6.

### (Nesting Process)

In the example illustrated in FIG. 21, the inputter 3 receives the start instruction for the nesting process. In the example illustrated in FIG. 21, the display 2 displays the image IN1 that accepts the start instruction for the nesting process (for example, the first button BN1 that accepts the start instruction for the nesting process). The inputter 3 receives the start instruction for the nesting process upon the image IN1 being directly touched or the image IN1 being clicked using a pointing device. Alternatively, the inputter 3 may receive the start instruction for the nesting process in response to the hardware button BT1 of the controller 1A being operated (refer to FIG. 8). In other words, the inputter 3 may include the hardware button BT1 that accepts the start instruction for the nesting process.

In the example illustrated in FIG. 21, the third image IM3 includes the image IN1 that accepts the start instruction for the nesting process (for example, the first button BN1 that accepts the start instruction for the nesting process). Alternatively, when the above-described nesting conditions are set in advance, the first image IM1 (refer to FIG. 19) or the second image IM2 (refer to FIG. 20) may include the image IN1 that accepts the start instruction for the nesting process (for example, the first button BN1 that accepts the start instruction for the nesting process).

When the image IN1 that accepts the start instruction for the nesting process is displayed on the display 2 of the controller 1A or when the controller 1A includes the hardware button BT1 that accepts the start instruction for the nesting process, it is possible for the user (more specifically, the operator) to instruct starting of the nesting process on site (more specifically, at the location where the laser beam machine 101 is installed). This facilitates the procedure for additionally producing the first part Q1 and reduces a workload and a work time for additionally producing the first part Q1. Furthermore, it is unnecessary for the user (more specifically, the operator) to move from the site (more specifically, from the location where the laser beam machine 101 is installed) to the office at which management of the machining result is performed, in order to instruct starting of the nesting process.

In the example illustrated in FIG. 18, the controller 1A (more specifically, the computing apparatus 4) causes the computing apparatus 4 to function as a nesting processor 42 by executing the program P (more specifically, the nesting program PN) stored in the memory 6. The computing apparatus 4 (more specifically, the nesting processor 42) executes the nesting process.

The nesting process includes determining the arrangement of the first quantity V1 of the first part Q1 in the at least one workpiece W, based on the nesting conditions that have been set. More specifically, the nesting process includes determining the arrangement (for example, one-dimensional arrangement) of the first quantity V1 of the first part Q1 in the at least one workpiece W, based on the nesting conditions that have been set (for example, the dimension of the workpiece W, or the dimension of the workpiece W and the length of the margin of the edge portion of the workpiece W), the dimension of the first part Q1, and the first quantity V1.

Note that, when the at least one workpiece W includes a plurality of workpieces W that have the same shape, the nesting process may include determining the arrangement of the first quantity V1 of the first part Q1 in the plurality of workpieces W to minimize the required number of workpieces W, based on the dimension of the workpiece W, the dimension of the first part Q1, and the first quantity V1.

Additionally, the nesting process may include determining the arrangement (for example, the one-dimensional arrangement) of the second quantity V2 of the second part Q2 in the at least one workpiece W. More specifically, the nesting process may include determining the arrangement of the first quantity V1 of the first part Q1 in the at least one workpiece W and the arrangement of the second quantity V2 of the second part Q2 in the at least one workpiece W, based on the nesting conditions that have been set (for example, the dimension of the workpiece W, or the dimension of the workpiece W and the length of the margin of the edge portion of the workpiece W), the dimension of the first part Q1, the first quantity V1, the dimension of the second part Q2, and the second quantity V2.

Note that, when the at least one workpiece W includes a plurality of workpieces W that have the same shape, the nesting process may include determining the arrangement of the first quantity V1 of the first part Q1 in the plurality of workpieces W and the arrangement of the second quantity V2 of the second part Q2 in the plurality of workpieces W to minimize the required number of workpieces W, based on the dimensions of the workpieces W, the dimension of the first part Q1, the first quantity V1, the dimension of the second part Q2, and the second quantity V2.

The nesting process may include determining the arrangement (for example, the one-dimensional arrangement) of the third quantity V3 of the third part Q3 in the at least one workpiece W. More specifically, the nesting process may include determining the arrangement of the first quantity V1 of the first part Q1 in the at least one workpiece W, the arrangement of the second quantity V2 of the second part Q2 in the at least one workpiece W, and the arrangement of the third quantity V3 of the third part Q3 in the at least one workpiece W, based on the nesting conditions that have been set (for example, the dimension of the workpiece W, or the dimension of the workpiece W and the length of the margin of the edge portion of the workpiece W), the dimension of the first part Q1, the first quantity V1, the dimension of the second part Q2, the second quantity V2, the dimension of the third part Q3, and the third quantity V3.

Note that, when the at least one workpiece W includes a plurality of workpieces W that have the same shape, the nesting process may include determining the arrangement of the first quantity V1 of the first part Q1 in the plurality of workpieces W, the arrangement of the second quantity V2 of the second part Q2 in the plurality of workpieces W, the arrangement of the third quantity V3 of the third part Q3 in the plurality of workpieces W to minimize the required number of workpieces W, based on the dimension of the workpiece W, the dimension of the first part Q1, the first quantity V1, the dimension of the second part Q2, the second quantity V2, the dimension of the third part Q3, and the third quantity V3.

The nesting process may be performed only on at least one kind of part selected to be additionally ordered via the plurality of selection fields (more specifically, the plurality of selection fields (24-1, 24-2, 24-3, and so on) included in the first image IM1) displayed on the display 2 out of the plurality of types of parts. For example, in the example illustrated in FIG. 17, only the first part, the second part, and the third part are selected as the items to be additionally ordered out of a plurality of types of parts via the plurality of selection fields displayed on the display 2. More specifically, in FIG. 19, only the first selection field 24-1 corresponding to the first identifier F1 identifying the first part Q1, the second selection field 24-2 corresponding to the second identifier F2 identifying the second part Q2, and the third selection field 24-3 corresponding to the third identifier F3 identifying the third part Q3 are marked with checkmarks. In this case, the nesting process is performed only on the first part Q1, the second part Q2, and the third part Q3.

FIG. 22 schematically illustrates an example of the arrangement of the at least one part in the at least one workpiece W determined by the execution of the nesting process. In the example illustrated in FIG. 22, the display 2 displays three workpieces W (more specifically, three workpieces W that have the same shape), the first quantity V1 of the first part Q1, the second quantity V2 of the second part Q2, and the third quantity V3 of the third part Q3.

As illustrated in FIG. 22, the nesting process may include determining the arrangement of the first quantity V1 of the first part Q1 in the at least one workpiece W and the arrangement of the second quantity V2 of the second part Q2 in the at least one workpiece W so as to minimize the total amount of offcuts Ws generated from the at least one workpiece W (for example, the total amount of the offcuts Ws generated from the plurality of workpieces W that have the same shape). In the example illustrated in FIG. 22, while it is possible to arrange two first parts Q1 in the first workpiece W-1 included in the at least one workpiece W, it is difficult to arrange three first parts Q1 in the first workpiece W-1. When only two first parts Q1 are arranged in the first workpiece W-1, the size of the offcut Ws from the first workpiece W-1 is large. In contrast, in the example illustrated in FIG. 22, two first parts Q1 and one second part Q2 are arranged in the first workpiece W-1. This minimizes the total amount of the offcut Ws generated from the plurality of workpieces W that have the same shape. In the example illustrated in FIG. 22, the first part Q1 and the second part Q2 are mixed in the first workpiece W-1, and the first part Q1 and the second part Q2 are mixed in the second workpiece W-2.

As illustrated in FIG. 22, the nesting process may include determining the arrangement of the first quantity V1 of the first part Q1 in the at least one workpiece W, the arrangement of the second quantity V2 of the second part Q2 in the at least one workpiece W, and the arrangement of the third quantity V3 of the third part Q3 in the at least one workpiece W so as to minimize the total amount of the offcuts Ws generated from the at least one workpiece W (for example, the total amount of the offcuts Ws generated from the plurality of workpieces W that have the same shape). In the example illustrated in FIG. 22, while it is possible to arrange one first part Q1 and two second parts Q2 in the second workpiece W-2 included in the at least one workpiece W, it is difficult to arrange one first part Q1 and three second parts Q2 in the second workpiece W-2. Therefore, in the example illustrated in FIG. 22, one first part Q1, two second parts Q2, and one third part Q3 are arranged in the second workpiece W-2. This minimizes the total amount of the offcuts Ws generated from the plurality of workpieces W that have the same shape. In the example illustrated in FIG. 22, the second parts Q2 and the third part Q3 are mixed in the second workpiece W-2, and the second parts Q2 and the third part Q3 are mixed in the third workpiece W-3. Additionally, in the example illustrated in FIG. 22, the first part Q1 is also arranged in the second workpiece W-2.

### (Displaying Execution Result of Nesting Process)

The display 2 may display the execution result of the nesting process. More specifically, the controller 1A (more specifically, the computing apparatus 4) generates a second display command by executing the program P stored in the memory 6, and the display 2 that receives the second display command from the computing apparatus 4 displays an image (hereinafter, referred to as a "fourth image IM4") including the execution result of the nesting process. The fourth image IM4 may be automatically displayed on the display 2 after the execution of the nesting process. The second display command is a command that causes the display 2 to display the execution result of the nesting process, and the fourth image IM4 is an image including the execution result of the nesting process.

In the example illustrated in FIG. 23, the fourth image IM4 includes an image IG indicating the arrangement of at least one first part Q1 in the at least one workpiece W. Additionally, the image IG may indicate the arrangement of at least one second part Q2 in the at least one workpiece W.

In the example illustrated in FIG. 23, based on the execution result of the nesting process (more specifically, in response to the determination of the arrangement of the first quantity V1 of the first part Q1 in the at least one workpiece W), the display 2 displays an image IM4-1 indicating the positional relationship between the first workpiece W-1 included in the at least one workpiece W and the plurality of parts to be produced from the first workpiece W-1. In other words, the above-described fourth image IM4 includes the image IM4-1 indicating the positional relationship between the first workpiece W-1 included in the at least one workpiece W and the plurality of parts to be produced from the first workpiece W-1.

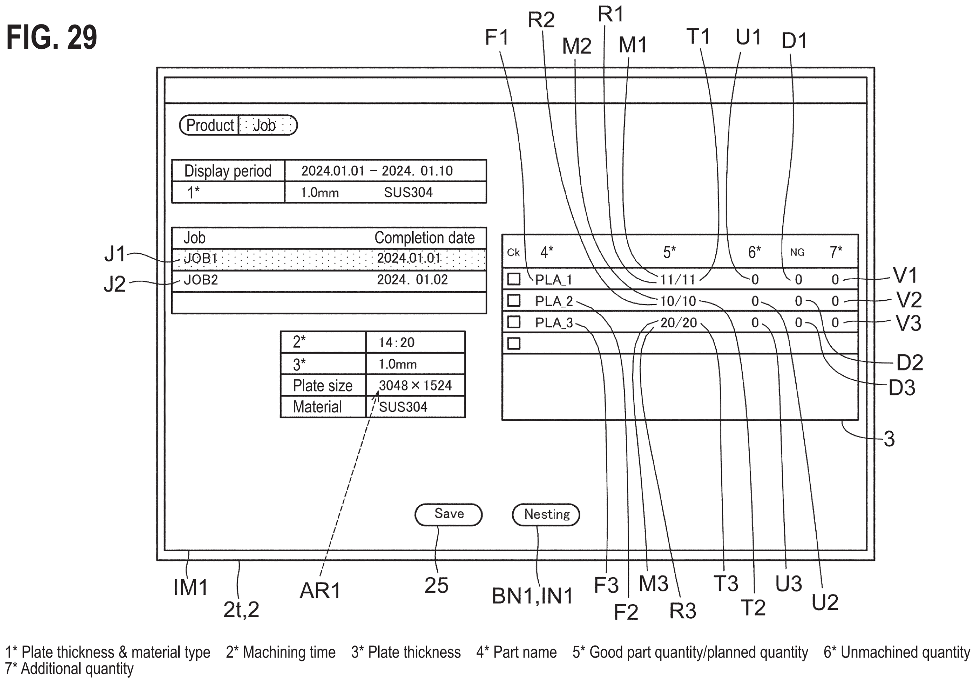

In the example illustrated in FIG. 23, based on the execution result of the nesting process (more specifically, in response to the determination of the arrangement of the first quantity V1 of the first part Q1 in the at least one workpiece W), the display 2 displays the first identifier F1 identifying the first part Q1 to be produced from the first workpiece W-1 included in the at least one workpiece W and a quantity N1-1 of the first part Q1 to be produced from the first workpiece W-1. In other words, the above-described fourth image IM4 includes the first identifier F1 identifying the first part Q1 to be produced from the first workpiece W-1 included in the at least one workpiece W and the quantity N1-1 of the first part Q1 to be produced from the first workpiece W-1. The above-described fourth image IM4 may include a first workpiece identifier E1 identifying the first workpiece W-1 (or a first program identifier J1 (refer to FIG. 29) identifying a first additional machining program for machining the first workpiece W-1). Furthermore, the above-described fourth image IM4 may include data H1 indicating the time required to produce the plurality of parts from the first workpiece W-1.

As illustrated in FIG. 23, the fourth image IM4 displayed on the display 2 may include a second workpiece identifier E2 identifying the second workpiece included in the at least one workpiece W (or a second program identifier identifying a second additional machining program for machining the second workpiece W-2). Furthermore, as illustrated in FIG. 23, the fourth image IM4 displayed on the display 2 may include a third workpiece identifier E3 identifying a third workpiece included in the at least one workpiece W (or a third program identifier identifying a third additional machining program for machining the third workpiece). Each of the at least one workpiece W is, for example, a long workpiece such as a pipe. For example, the first workpiece W-1 is a long workpiece such as a pipe. Additionally, the second workpiece is a long workpiece such as a pipe, and the third workpiece is a long workpiece such as a pipe.

In the example illustrated in FIG. 23, the computing apparatus 4 generates the second display command in response to the first workpiece identifier E1 being selected out of the plurality of workpiece identifiers E displayed on the display 2, such that the fourth image IM4 includes the identifiers (F1 and F2) of the parts to be produced from the first workpiece W-1 and the quantities (N1-1 and N1-2) of the parts to be produced from the first workpiece W-1. The display 2 that receives the second display command displays, as part of the fourth image IM4, the identifiers (F1 and F2) of the parts to be produced from the first workpiece W-1 and the quantities (N1-1 and N1-2) of the parts to be produced from the first workpiece W-1.

In response to the first identifier F1 identifying the first part Q1 being selected in the fourth image IM4 out of the plurality of part type identifiers F identifying the kind of the plurality of parts, the modeling image 81 that models the first part Q1 may be displayed on the display 2 as part of the fourth image IM4.

In the example illustrated in FIG. 24, the computing apparatus 4 generates the second display command in response to the second workpiece identifier E2 being selected out of the plurality of workpiece identifiers E displayed on the display 2, such that the fourth image IM4 includes the identifiers (F1, F2, and F3) of the parts to be produced from the second workpiece W-2 and quantities (N2-1, N2-2, and N2-3) of the parts to be produced from the second workpiece W-2. The display 2 that receives the second display command displays, as part of the fourth image IM4, the identifiers (F1, F2, and F3) of the parts to be produced from the second workpiece W-2 and the quantities (N2-1, N2-2, and N2-3) of the parts to be produced from the second workpiece W-2. Additionally, the display 2 that receives the second display command may display an image IM4-2 indicating the positional relationship between the second workpiece W-2 and the plurality of parts to be produced from the second workpiece W-2.

In response to the second identifier F2 identifying the second part Q2 being selected in the fourth image IM4 out of the plurality of part type identifiers F identifying the kind of the plurality of parts, the modeling image 82 that models the second part Q2 may be displayed on the display 2 as part of the fourth image IM4.

### (Fourth Save Button 28)

In the example illustrated in FIGs. 23 and 24, the fourth image IM4 includes a fourth button 28 (more specifically, an image of the fourth button 28).

In response to the fourth button 28 being touched or clicked, the result of the above-described nesting process may be stored in the memory 6. For example, in response to the fourth button 28 being touched or clicked, arrangement data DT including the data specifying the arrangement of the first quantity V1 of the first part Q1 in the at least one workpiece W may be stored in the memory 6 (refer to FIG. 25). The arrangement data DT stored in the memory 6 may include data specifying the arrangement of the second quantity V2 of the second part Q2 in the at least one workpiece W and/or data specifying the arrangement of the third quantity V3 of the third part Q3 in the at least one workpiece W.

Note that, in the embodiment, the displaying of the execution result of the nesting process on the display 2 (refer to FIGs. 23 and 24) may be omitted.

### (Generation of Additional Machining Program PG)

The inputter 3 receives a start instruction for the process of generating the at least one additional machining program PG (hereinafter, referred to as a "fourth process"), based on the result of the nesting process. In the example illustrated in FIGs. 23 and 24, the display 2 displays an image IN3 (more specifically, a fifth button 29) that accepts the start instruction for the fourth process. In response to the image IN3 (more specifically, the fifth button 29) being touched or clicked, the start instruction for the above-described fourth process is received by the inputter 3. Alternatively, the inputter 3 may receive the start instruction for the above-described fourth process in response to a hardware button BT2 (refer to FIG. 8) of the controller 1A being operated. In other words, the inputter 3 may include the hardware button BT2 that accepts the start instruction for the fourth process.

When the image IN3 that accepts the start instruction for the process of generating the at least one additional machining program PG is displayed on the display 2 of the controller 1A or when the controller 1A includes the hardware button BT2 that accepts the start instruction for the process of generating the at least one additional machining program PG, it is possible for the user (more specifically, the operator) to instruct starting of the process of generating the at least one additional machining program PG on site (more specifically, at the location where the laser beam machine 101 is installed). This facilitates the procedure for additionally producing the first part Q1 and reduces a workload and a work time for additionally producing the first part Q1. Furthermore, it is unnecessary for the user (more specifically, the operator) to move from the site (more specifically, from the location where the laser beam machine 101 is installed) to the office at which management of the machining result is performed, in order to instruct starting of the process of generating the at least one additional machining program PG.

In response to the start instruction for the above-described fourth process being received by the inputter 3, the fourth process of generating the at least one additional machining program PG is executed. The fourth process is executed by, for example, the controller 1A (more specifically, the computing apparatus 4). The fourth process may include generating an additional schedule CG. The additional schedule CG includes the at least one additional machining program PG and specifies an execution order of the at least one machining program PG.

In the example illustrated in FIG. 25, the controller 1A (more specifically, the computing apparatus 4) causes the computing apparatus 4 to function as a machining program generator 43 by executing the program P (more specifically, the machining program generating program PT) stored in the memory 6.

The computing apparatus 4 (more specifically, the machining program generator 43) executes the fourth process of generating the at least one additional machining program PG, based on the result of the above-described nesting process.

For example, the controller 1A (more specifically, the computing apparatus 4) executes the fourth process of generating the at least one additional machining program PG (more specifically, the additional schedule CG), based on the result of the above-described nesting process (more specifically, based on the arrangement of the first quantity V1 of the first part Q1 in the at least one workpiece W, the arrangement of the first quantity V1 of the first part Q1 and the second quantity V2 of the second part Q2 in the at least one workpiece W, or the arrangement of the first quantity V1 of the first part Q1, the second quantity V2 of the second part Q2, and the third quantity V3 of the third part Q3 in the at least one workpiece W). The fourth process is preferably automatically executed by the controller 1A (more specifically, the computing apparatus 4).

The at least one additional machining program PG (more specifically, the additional schedule CG) generated by executing the fourth process is stored in the memory 6 (refer to FIG. 25). In the example illustrated in FIG. 25, the additional schedule CG includes a first additional machining program PG1 that produces the plurality of parts from the first workpiece W-1, a second additional machining program PG2 that produces the plurality of parts from the second workpiece W-2, a third additional machining program PG3 that produces the plurality of parts from a third workpiece W-3, and data 95 that specifies the execution order of the plurality of additional machining programs PG.

### (Execution of Additional Machining Program PG)

The controller 1A (more specifically, the computing apparatus 4) executes the second process of generating the second control command SB that causes the laser beam machine 101 to produce the first quantity V1 of the first part Q1 from the at least one workpiece W by executing the at least one additional machining program PG (more specifically, the additional schedule CG) that has been generated.

Note that, when the at least one additional machining program PG (more specifically, the additional schedule CG) is generated based on the arrangement of the first quantity V1 of the first part Q1 and the second quantity V2 of the second part Q2 in the at least one workpiece W, the controller 1A (more specifically, the computing apparatus 4) that executes the at least one additional machining program PG (more specifically, the additional schedule CG) generates the second control command SB that causes the laser beam machine 101 to produce the first quantity V1 of the first part Q1 and the second quantity V2 of the second part Q2 from the at least one workpiece W. When the at least one additional machining program PG (more specifically, the additional schedule CG) is generated based on the arrangement of the first quantity V1 of the first part Q1, the second quantity V2 of the second part Q2, and the third quantity V3 of the third part Q3 in the at least one workpiece W, the controller 1A (more specifically, the computing apparatus 4) that executes the at least one additional machining program PG (more specifically, the additional schedule CG) generates the second control command SB that causes the laser beam machine 101 to produce the first quantity V1 of the first part Q1, the second quantity V2 of the second part Q2, and the third quantity V3 of the third part Q3 from the at least one workpiece W.

### (Laser Beam Machining System 100A)

In the example illustrated in FIG. 9, the laser beam machining system 100A includes the laser beam machine 101 and the controller 1A, which controls the laser beam machine 101. The controller 1A has already been described, and therefore a redundant description for the controller 1A will be omitted.

### (Laser Beam Machine 101)

In the example illustrated in FIG. 9, the laser beam machine 101 includes a laser irradiator 110 including the laser head 111, a mover 120, and a work holder 130.

In the example illustrated in FIG. 9, the work holder 130 includes a first chuck 131 and a second chuck 134. The first chuck 131 and the second chuck 134 support the workpiece W (for example, the first workpiece W-1).

The first chuck 131 supports a first portion of the workpiece W (for example, the first workpiece W-1). Note that, in the description, the workpiece W includes the entire material. Specifically, the workpiece W includes a region to be machined by the laser beam and a region that cannot be machined by the laser beam due to being supported by the first chuck 131 (in other words, an edge portion of the material close to the first chuck 131). The first chuck 131 may include a grip member 132 that is capable of gripping the workpiece W (for example, the first workpiece W-1). The first chuck 131 may be movable in a direction parallel to an X-axis together with the workpiece W (for example, the first workpiece W-1). Note that, in the example illustrated in FIG. 9, the X-axis is an axis parallel to a longitudinal direction of the workpiece W (for example, the first workpiece W-1) gripped by the first chuck 131.

The second chuck 134 supports a second portion of the workpiece W (for example, the first workpiece W-1). The second chuck 134 may include a plurality of guide rollers 135 that sandwich the workpiece W (for example, the first workpiece W-1). The plurality of guide rollers 135 guide the movement of the workpiece W (for example, the first workpiece W-1) in a direction parallel to the X-axis.

In the example illustrated in FIG. 9, the work holder 130 may include a rotational driver 137 that causes the workpiece W (for example, the first workpiece W-1) to rotate about an axis parallel to the longitudinal direction of the workpiece W (for example, the first workpiece W-1).

The mover 120 moves the laser head 111 relative to the work holder 130.

In the example illustrated in FIG. 9, the mover 120 includes a first mover 121 that moves the laser head 111. The mover 120 may include a work mover (more specifically, a motor that moves the workpiece W in a direction parallel to the X-axis) that moves the workpiece W (for example, the first workpiece W-1).

In the example illustrated in FIG. 9, the first mover 121 includes moving bodies (122a and 123a) that support the laser head 111 and drive devices (122b and 123b) that move the moving bodies (122a and 123a).

The first mover 121 may include the first moving body 122a and the first drive device 122b that moves the first moving body 122a in a direction parallel to a Z-axis. In the example illustrated in FIG. 9, the first moving body 122a directly or indirectly supports the laser head 111, and is movable in the direction parallel to the Z-axis together with the laser head 111. Note that, the Z-axis is an axis perpendicular to the X-axis. In the example illustrated in FIG. 9, the Z-axis is an axis parallel to a vertical direction.

The first mover 121 may include the second moving body 123a and the second drive device 123b that moves the second moving body 123a in a direction parallel to a Y-axis. In the example illustrated in FIG. 9, the second moving body 123a directly or indirectly supports the laser head 111, and is movable in the direction parallel to the Y-axis together with the laser head 111. Note that, the Y-axis is an axis perpendicular to the X-axis and the Z-axis. In the example illustrated in FIG. 9, the Y-axis is an axis parallel to a horizontal plane.

The laser irradiator 110 includes the laser head 111, a laser light source 113, and an optical component 115 (for example, an optical fiber) that transmits the laser beam from the laser light source 113 to the laser head 111. The laser head 111 includes a laser emission port 112 from which the laser beam is emitted.

In the example illustrated in FIG. 9, the communication circuit 5 transmits the second control command SB generated by the controller 1A (more specifically, the computing apparatus 4) to the laser beam machine 101, and the laser beam machine 101 that receives the second control command SB machines the at least one workpiece W by applying the laser beam to the at least one workpiece W. More specifically, the laser beam machine 101 that receives the second control command SB produces the first quantity V1 of the first part Q1 from the at least one workpiece W by applying the laser beam to the at least one workpiece W.

Note that, when the at least one additional machining program PG (more specifically, the additional schedule CG) is generated based on the arrangement of the first quantity V1 of the first part Q1 and the second quantity V2 of the second part Q2 in the at least one workpiece W, the laser beam machine 101 that receives the second control command SB produces the first quantity V1 of the first part Q1 and the second quantity V2 of the second part Q2 from the at least one workpiece W by applying the laser beam to the at least one workpiece W. When the at least one additional machining program PG (more specifically, the additional schedule CG) is generated based on the arrangement of the first quantity V1 of the first part Q1, the second quantity V2 of the second part Q2, and the third quantity V3 of the third part Q3 in the at least one workpiece W, the laser beam machine 101 that receives the second control command SB produces the first quantity V1 of the first part Q1, the second quantity V2 of the second part Q2, and the third quantity V3 of the third part Q3 from the at least one workpiece W by applying the laser beam to the at least one workpiece W.

In the example illustrated in FIG. 9, the second control command SB includes a plurality of commands such as the movement command SB1 that moves the laser head 111, the emission command SB2 that causes the laser head 111 to emit the laser beam, a workpiece movement command that linearly moves the workpiece W (for example, the first workpiece W-1), and a rotation command SB3 that rotates the workpiece W (for example, the first workpiece W-1).

As illustrated in FIG. 26, the laser beam machine 101 may include a loader 103, a laser beam machining unit 105, and an unloader 107. The workpiece W loaded on the loader 103 is carried to the laser beam machining unit 105 by the mover such as the work mover. The part such as the first part Q1 produced from the workpiece W is carried from the laser beam machining unit 105 to the unloader 107 by any transporter such as a conveyor.

### (CAD/CAM System 7)

In the example illustrated in FIG. 26, the laser beam machining system 100A includes the CAD/CAM system 7. The CAD/CAM system 7 generates the at least one machining program PM. In the example illustrated in FIG. 26, the CAD/CAM system 7 and the controller 1A are coupled to enable information transmission via wired LN or wireless communication. In this case, it is possible for the CAD/CAM system 7 to transmit the at least one machining program PM generated by the CAD/CAM system 7 to the controller 1A via wired LN or wireless communication. The controller 1A stores the at least one machining program PM received by the controller 1A in the memory 6. Alternatively or additionally, the at least one machining program PM generated by the CAD/CAM system 7 may be stored in a portable memory 69 (for example, a USB memory). In this case, the controller 1A may receive the at least one machining program PM from the portable memory 69. The controller 1A stores, in the memory 6, the at least one machining program PM received from the portable memory 69.

Note that, the CAD is an abbreviation for "Computer-Aided Design" and the CAM is an abbreviation for "Computer-Aided Manufacturing". The CAD/CAM system 7 is capable of generating a part drawing and is capable of generating a machining program (for example, the at least one machining program PM), based on the generated part drawing.

In the example illustrated in FIG. 26, the controller 1A is placed at a location where the laser beam machine 101 is installed. More specifically, the controller 1A and the laser beam machine 101 are located in a common work room SP1. The controller 1A may be mounted on the laser beam machine 101 (for example, an outer wall of the laser beam machine 101). In the example illustrated in FIG. 26, the CAD/CAM system 7 is located in a room (more specifically, an office space SP2) different from the work room SP1 where the laser beam machine 101 is installed.

The generation of the at least one machining program PM is performed using the CAD/CAM system 7, and the generation of the at least one additional machining program PG may be performed using the controller 1A. For example, the controller 1A may generate the at least one machining program PM, based on the at least one machining program PM generated by the CAD/CAM system 7.

Referring to FIGs. 19 to 25, an example in which the nesting process is executed by the controller 1A (more specifically, the computing apparatus 4) has been described. Alternatively, the nesting process may be executed by the CAD/CAM system 7.

When the nesting process is executed by the CAD/CAM system 7, the controller 1A transmits, to the CAD/CAM system 7, the nesting conditions that have been set, the first identification information 61-1 identifying the first part Q1 (for example, the first identifier F1), and the data DA including the first quantity V1 (refer to FIG. 27). The data DA transmitted from the controller 1A to the CAD/CAM system 7 may include the second identification information 61-2 identifying the second part Q2 (for example, the second identifier F2) and the second quantity V2. Additionally, the data DA transmitted from the controller 1A to the CAD/CAM system 7 may include the third identification information 61-3 identifying the third part Q3 (for example, the third identifier F3) and the third quantity V3.

The CAD/CAM system 7 executes the nesting process of determining the arrangement of the first quantity V1 of the first part Q1 in the at least one workpiece W, based on the data DA (for example, the nesting condition that has been set, the first identification information 61-1 identifying the first part Q1, and the first quantity V1) received from the controller 1A.

The generation of the at least one additional machining program PG may be executed by the CAD/CAM system 7. For example, the CAD/CAM system 7 may execute the fourth process of generating the at least one additional machining program PG (more specifically, the additional schedule CG), based on the result of the above-described nesting process (more specifically, based on the arrangement of the first quantity V1 of the first part Q1 in the at least one workpiece W, the arrangement of the first quantity V1 of the first part Q1 and the second quantity V2 of the second part Q2 in the at least one workpiece W, or the arrangement of the first quantity V1 of the first part Q1, the second quantity V2 of the second part Q2, and the third quantity V3 of the third part Q3 in the at least one workpiece W).

The CAD/CAM system 7 may transmit the at least one additional machining program PG (more specifically, the additional schedule CG) generated by the execution of the fourth process to the controller 1A (refer to FIG. 27). The controller 1A stores, in the memory 6, the at least one additional machining program PG (more specifically, the additional schedule CG) received from the CAD/CAM system 7.

### (Second Embodiment)

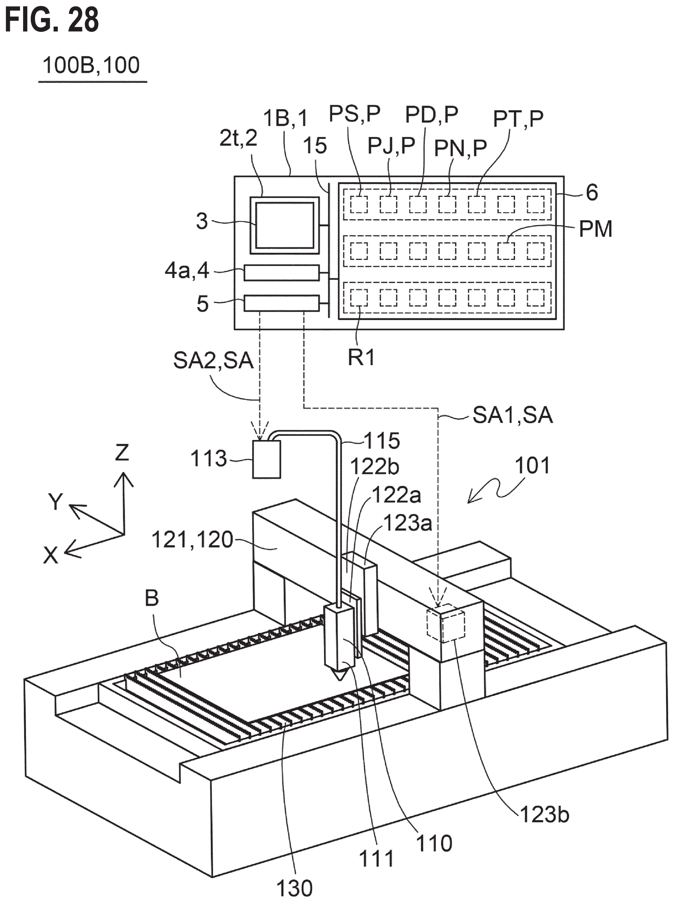

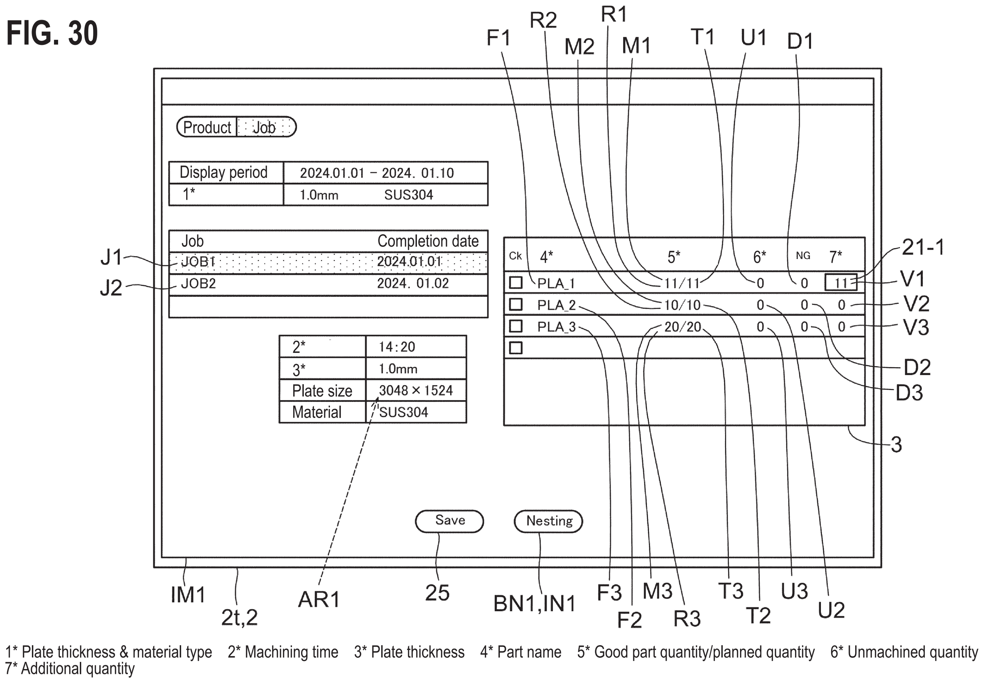

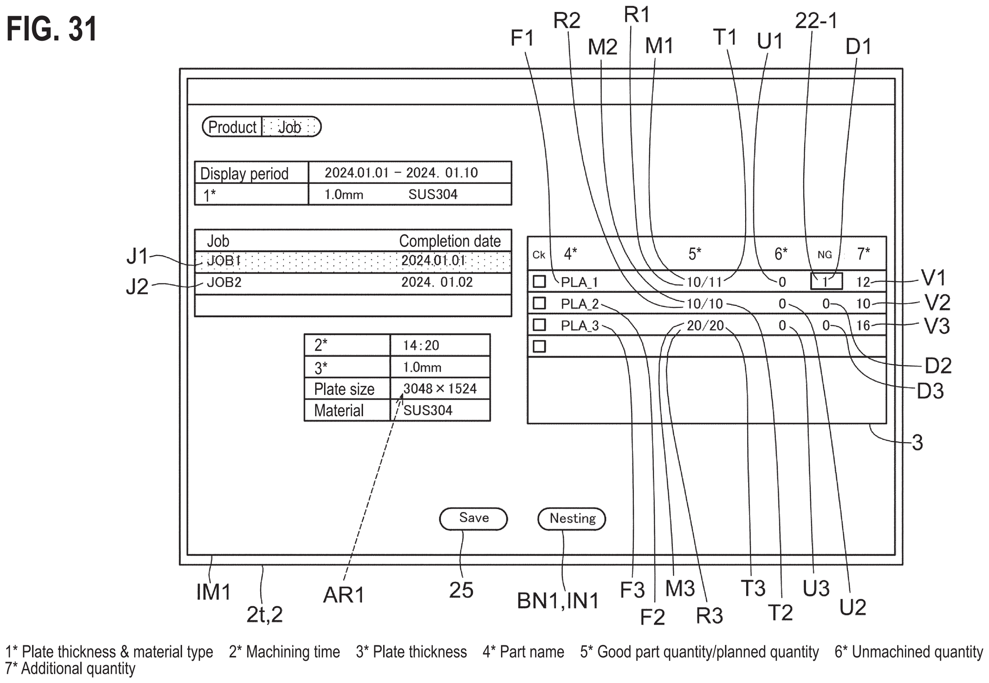

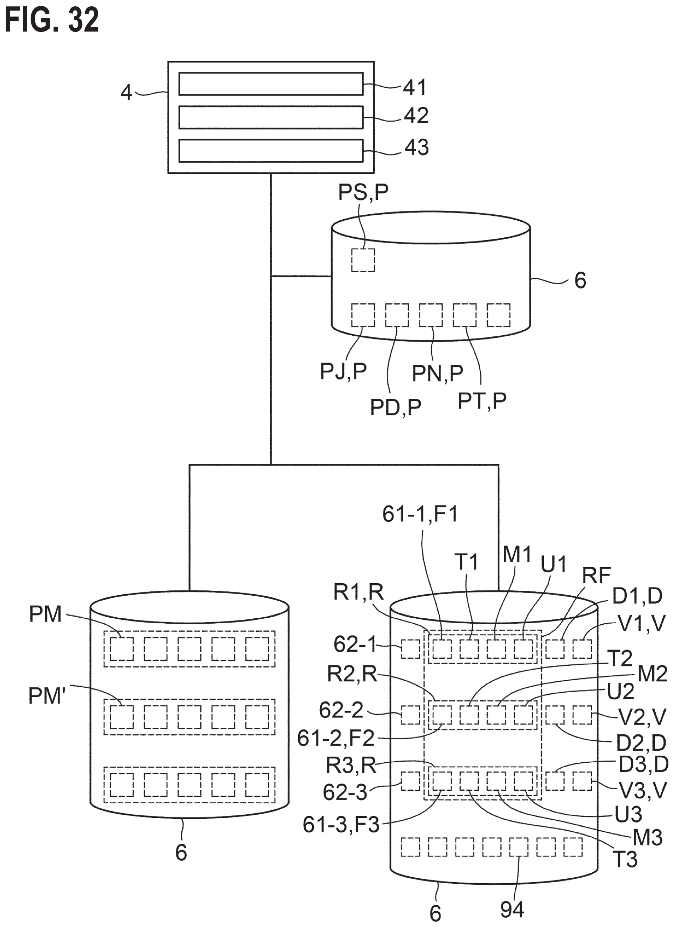

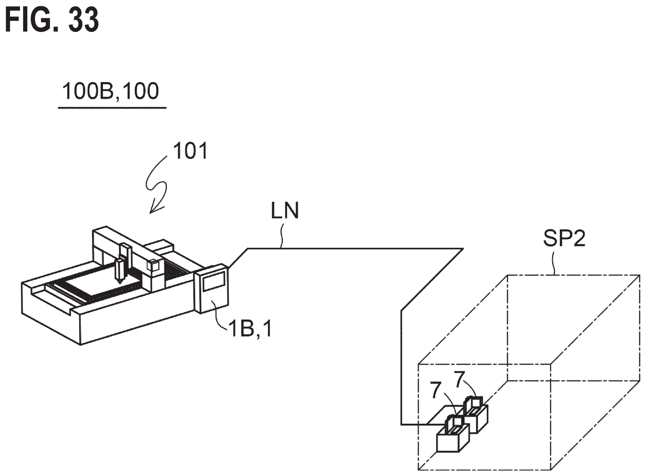

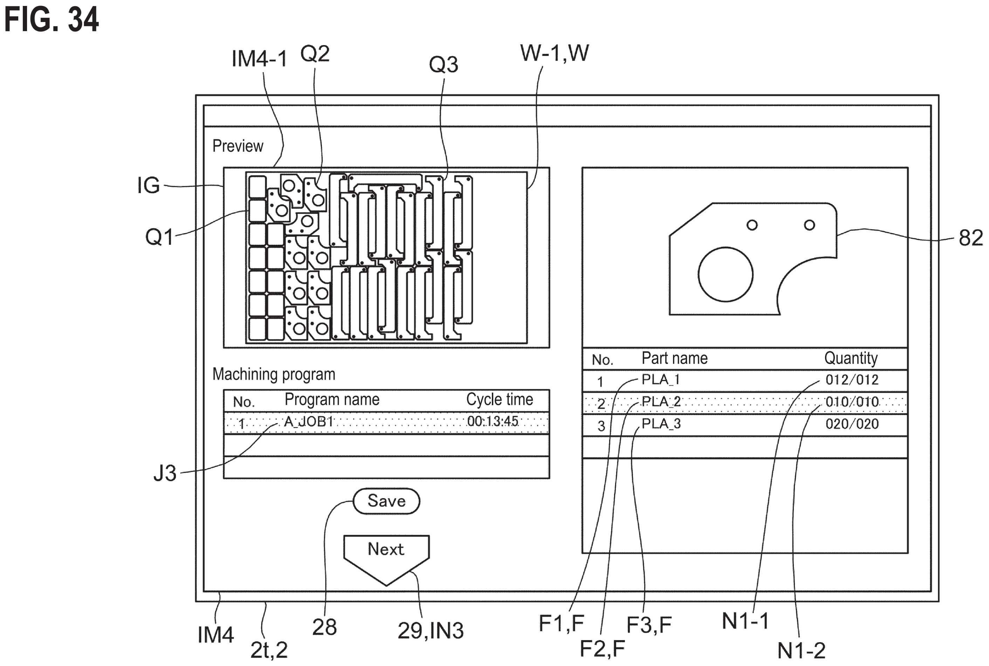

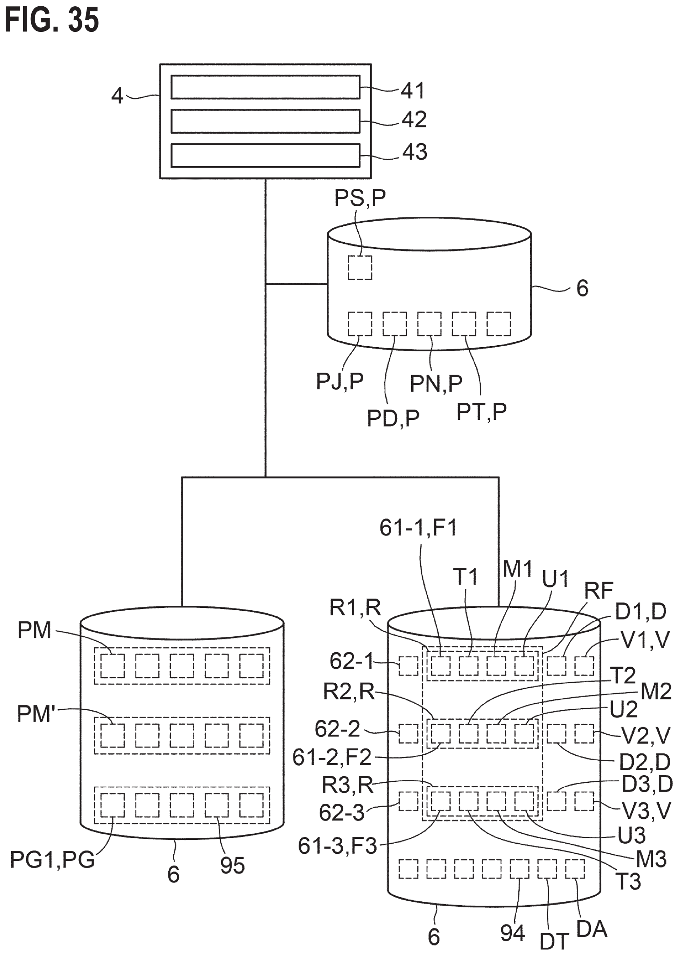

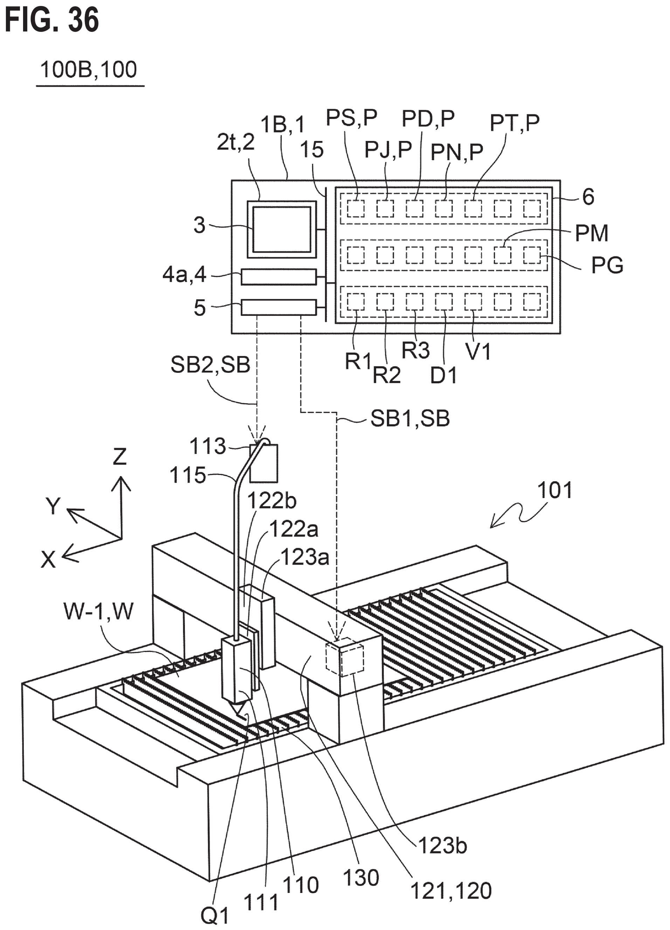

Referring to FIGs. 28 to 36, a controller 1B of a laser beam machine and a laser beam machining system 100B according to a second embodiment will be described. FIG. 28 is a diagram schematically illustrating the laser beam machining system 100B according to the second embodiment. FIG. 29 is a diagram schematically illustrating a state in which machining results of parts are displayed on the display 2. FIG. 30 is a diagram schematically illustrating a state in which the first quantity V1 indicating the additional order quantity of the first part Q1 is input. FIG. 31 is a diagram schematically illustrating a state in which the first defective part quantity D1 is input. FIG. 32 is a diagram schematically illustrating an example of information stored in the memory 6. FIG. 33 is a diagram schematically illustrating the laser beam machining system 100B according to the second embodiment. FIG. 34 is a diagram schematically illustrating a state in which an image including an execution result of the nesting process is displayed on the display 2. FIG. 35 is a diagram schematically illustrating an example of information stored in the memory 6. FIG. 36 is a diagram schematically illustrating the laser beam machining system 100B according to the second embodiment.

The controller 1B of the laser beam machine and the laser beam machining system 100B according to the second embodiment are different from the controller 1A of the laser beam machine and the laser beam machining system 100A according to the first embodiment in that the at least one workpiece W is a plate material. The second embodiment is similar to the first embodiment in other respects.

In the second embodiment, the differences from the first embodiment will mainly be described. Meanwhile, in the second embodiment, redundant descriptions of items that have already been described in the first embodiment are omitted. Therefore, in the second embodiment, even without an explicit description, it goes without saying that the items that have already been described in the first embodiment may be applied to the second embodiment. Vice versa, the items described in the second embodiment are applicable to the first embodiment.

As illustrated in FIGs. 28 to 36, the controller 1B of the laser beam machine according to the second embodiment includes (1) the display 2 that displays the first machining result R1 indicating the machining result of the first part Q1 produced by the laser beam machine 101 operating based on the first control command SA, which is generated by the execution of the at least one machining program PM, (2) the inputter 3 that, when the additional order quantity of the first part Q1 is defined as the first quantity and the process including determining the arrangement of the first quantity V1 of the first part Q1 in the at least one workpiece W is defined as the nesting process, receives the input of the first quantity V1 or the input of the first instruction to change the first quantity V1, and the start instruction for the nesting process, (3) the computing apparatus 4 that generates the second control command SB that causes the laser beam machine 101 to produce the first quantity V1 of the first part Q1 from the at least one workpiece W by executing the at least one additional machining program PG generated based on the result of the nesting process, and (4) the communication circuit 5 that transmits the second control command SB to the laser beam machine 101.

Additionally, the laser beam machining system 100B of the second embodiment includes the above-described controller 1B and the laser beam machine 101 that is controlled by the controller 1B.

The controller 1B of the laser beam machine and the laser beam machining system 100B according to the second embodiment therefore have effects similar to those of the controller 1A of the laser beam machine and the laser beam machining system 100A according to the first embodiment.

### (Optional Additional Structures)

Next, optional additional structures adoptable in the controller 1B of the laser beam machine and the laser beam machining system 100B according to the second embodiment will be described with reference to FIGs. 28 to 36.

### (First Process)

In the example illustrated in FIG. 28, the controller 1B (more specifically, the computing apparatus 4) executes the first process of generating the first control command SA by executing the at least one machining program PM. The communication circuit 5 transmits the first control command SA to the laser beam machine 101. The laser beam machine 101 operates based on the first control command SA and produces a plurality of parts including the first part Q1.

### (Third Process)

The controller 1B (more specifically, the computing apparatus 4) executes the third process of generating the first display command by executing the program P (for example, the machining result generating program PD) stored in the memory 6, and the display 2 that receives the first display command from the computing apparatus 4 displays the first image IM1 (refer to FIG. 29). The first image IM1 includes the first machining result R1 indicating the machining result of the first part Q1 produced by the laser beam machine 101 operating based on the first control command SA. Additionally, the first image IM1 may include the second machining result R2 indicating the machining result of the second part Q2 produced by the laser beam machine 101 operating based on the first control command SA, and/or the third machining result R3 indicating the machining result of the third part Q3 produced by the laser beam machine 101 operating based on the first control command SA. The first machining result R1, the second machining result R2, and the third machining result R3 have already been described in the first embodiment, and therefore redundant descriptions for the first machining result R1, the second machining result R2, and the third machining result R3 will be omitted.

In the example illustrated in FIG. 30, the display 2 displays the first machining result R1 and the first quantity V1 at the same time in response to receiving the input of the first quantity V1 via the inputter 3. In the example illustrated in FIG. 31, the display 2 displays the first machining result R1 and the first quantity V1 at the same time in response to receiving the input of the first instruction to change the first quantity V1 (for example, the input of the first defective part quantity D1) via the inputter 3.

In the example illustrated in FIG. 31, the first image IM1 includes the first input field 22-1, which is the input field of the first defective part quantity D1. The first image IM1 may include the input field of the second defective part quantity D2 and/or the input field of the third defective part quantity D3. The first defective part quantity D1, the second defective part quantity D2, the third defective part quantity D3, the input field of the first defective part quantity D1, the input field of the second defective part quantity D2, and the input field of the third defective part quantity D3 have already been described in the first embodiment, and therefore redundant descriptions for these quantities and these input fields will be omitted.

In the first embodiment, an example in which the first image IM1 displayed on the display 2 includes the first schedule identifier C1 identifying the first schedule CM1 and the second schedule identifier C2 identifying the second schedule CM2 has been described (refer to FIG. 11). In the second embodiment, the first image IM1 displayed on the display 2 may include these schedule identifiers. Alternatively or additionally, as illustrated in FIG. 29, the first image IM1 displayed on the display 2 may include a plurality of program identifiers J including the first program identifier J1 identifying a first machining program PM1 and a second program identifier J2 identifying a second machining program PM2.

In the example illustrated in FIG. 29, in response to the first program identifier J1 being selected out of the plurality of program identifiers J displayed on the display 2, the computing apparatus 4 generates the first display command so as to include the machining results (for example, the first machining result R1, the second machining result R2, and/or the third machining result R3, as described above) of the parts produced by the laser beam machine 101, based on the execution of the first machining program PM1. The display 2 that receives the first display command displays, as part of the first image IM1, the machining result of each part produced by the laser beam machine 101, based on the execution of the first machining program PM1.

### (Nesting Process)

In the example illustrated in FIGs. 29, 30, and 31, the display 2 displays the image IN1 that accepts the start instruction for the nesting process (for example, the first button BN1 that accepts the start instruction for the nesting process). The nesting process is executed in response to the image IN1 (more specifically, the first button BN1) being touched or clicked. Alternatively, the nesting process may be executed in response to the hardware button BT1 (refer to FIG. 8) of the controller being operated.

In the example illustrated in FIG. 32, the controller 1B (more specifically, the computing apparatus 4) causes the computing apparatus 4 to function as the nesting processor 42 by executing the program P (more specifically, the nesting program PN) stored in the memory 6. The computing apparatus 4 (more specifically, the nesting processor 42) executes the nesting process.

The nesting process includes determining the arrangement of the first quantity V1 of the first part Q1 in the at least one workpiece W1, based on the nesting conditions that have been set (for example, the plate size indicating the dimension of the workpiece W (refer to dashed arrow AR1 in FIG. 30)), the dimension of the first part Q1, and the first quantity V1.

The nesting process has already been described in the first embodiment, and therefore a redundant description for the nesting process will be omitted.

Note that, the nesting process of the first embodiment and the nesting process of the second embodiment differ from each other in that the nesting process of the first embodiment is a process of determining the one-dimensional arrangement of the plurality of parts whereas the nesting process of the second embodiment is a process of determining the two-dimensional arrangement of the plurality of parts. In other respects, the nesting process of the second embodiment is similar to the nesting process of the first embodiment.

In the second embodiment, the nesting process includes determining the two-dimensional arrangement of the first quantity V1 of the first part Q1 in the at least one workpiece W. Additionally, in the second embodiment, the nesting process may include determining the two-dimensional arrangement of the second quantity V2 of the second part Q2 in the at least one workpiece W. Additionally, in the second embodiment, the nesting process may include determining the two-dimensional arrangement of the third quantity V3 of the third part Q3 in the at least one workpiece W.

In the example illustrated in FIG. 34, the display 2 of the controller 1B displays the execution result of the nesting process. More specifically, the computing apparatus 4 generates the second display command by executing the program P stored in the memory 6, and the display 2 that receives the second display command from the computing apparatus 4 displays the fourth image IM4 including the execution result of the nesting process.

In the example illustrated in FIG. 34, the fourth image IM4 includes the image IG indicating the arrangement of the at least one first part Q1 in the at least one workpiece W (for example, the first workpiece W-1). Additionally, the image IG may indicate the arrangement of the at least one second part Q2 in the at least one workpiece W (for example, the first workpiece W-1). Additionally, the image IG may indicate the arrangement of the at least one third part Q3 in the at least one workpiece W (for example, the first workpiece W-1).

In the example illustrated in FIG. 34, based on the execution result of the nesting process (more specifically, in response to the determination of the arrangement of the first quantity V1 of the first part Q1 in the at least one workpiece W), the display 2 displays the image IM4-1 indicating the positional relationship between the first workpiece W-1 included in the at least one workpiece W and the plurality of parts to be produced from the first workpiece W-1. In other words, the above-described fourth image IM4 includes the image IM4-1 indicating the positional relationship between the first workpiece W-1 included in the at least one workpiece W and the plurality of parts to be produced from the first workpiece W-1. As illustrated in FIG. 34, the above-described fourth image IM4 may include the program identifier (more specifically, a third program identifier J3) identifying the first additional machining program PG1 for producing the plurality of parts from the first workpiece W-1.

### (Fourth Process)

In the example illustrated in FIG. 34, the display 2 displays the image IN3 (more specifically, the fifth button 29) that accepts the start instruction for the fourth process of generating the at least one additional machining program PG, based on the result of the above-described nesting process. The fourth process of generating the at least one additional machining program PG is executed in response to the image IN3 (more specifically, the fifth button 29) being touched or clicked. Alternatively, the fourth process of generating the at least one additional machining program PG may be executed in response to the hardware button BT2 (refer to FIG. 8) of the controller being operated. The at least one additional machining program PG generated by executing the fourth process is stored in the memory 6 (refer to FIG. 35).

The fourth process of generating the at least one additional machining program PG has already been described in the first embodiment, and therefore a redundant description for the fourth process will be omitted.

### (Second Process)

In the example illustrated in FIG. 36, the controller 1B (more specifically, the computing apparatus 4) executes the second process of generating the second control command SB that causes the laser beam machine 101 to produce the first quantity V1 of the first part Q1 from the at least one workpiece W by executing the at least one additional machining program PG that has been generated based on at least the first quantity V1. Note that, when the at least one additional machining program PG is generated based on the arrangement of the first quantity V1 of the first part Q1 and the second quantity V2 of the second part Q2 in the at least one workpiece W, the controller 1B that executes the at least one additional machining program PG (more specifically, the computing apparatus 4) generates the second control command SB that causes the laser beam machine 101 to produce the first quantity V1 of the first part Q1 and the second quantity V2 of the second part Q2 from the at least one workpiece W.

### (Laser Beam Machine 101)

In the example illustrated in FIG. 36, the communication circuit 5 transmits the second control command SB generated by the controller 1B (more specifically, the computing apparatus 4) to the laser beam machine 101, and the laser beam machine 101 that receives the second control command SB machines the at least one workpiece W by applying the laser beam to the at least one workpiece W. More specifically, the laser beam machine 101 that receives the second control command SB produces the first quantity V1 of the first part Q1 from the at least one workpiece W by applying the laser beam to the at least one workpiece W.

Note that, when the at least one additional machining program PG is generated based on the arrangement of the first quantity V1 of the first part Q1 and the second quantity V2 of the second part Q2 in the at least one workpiece W, the laser beam machine 101 that receives the second control command SB produces the first quantity V1 of the first part Q1 and the second quantity V2 of the second part Q2 from the at least one workpiece W by applying the laser beam to the at least one workpiece W.

In the example illustrated in FIG. 36, the laser beam machine 101 includes the laser head 111 and the mover 120 that is capable of three-dimensionally moving the laser head 111. In the example illustrated in FIG. 36, the second control command SB includes the plurality of commands such as the movement command SB1 that moves the laser head 111 and the emission command SB2 that causes the laser head 111 to emit the laser beam.

### (Third Embodiment)

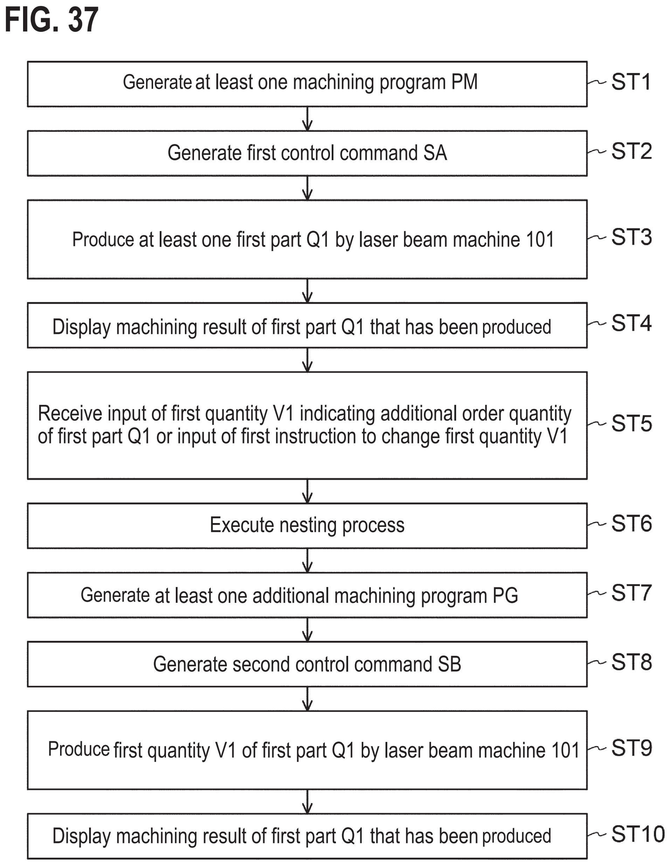

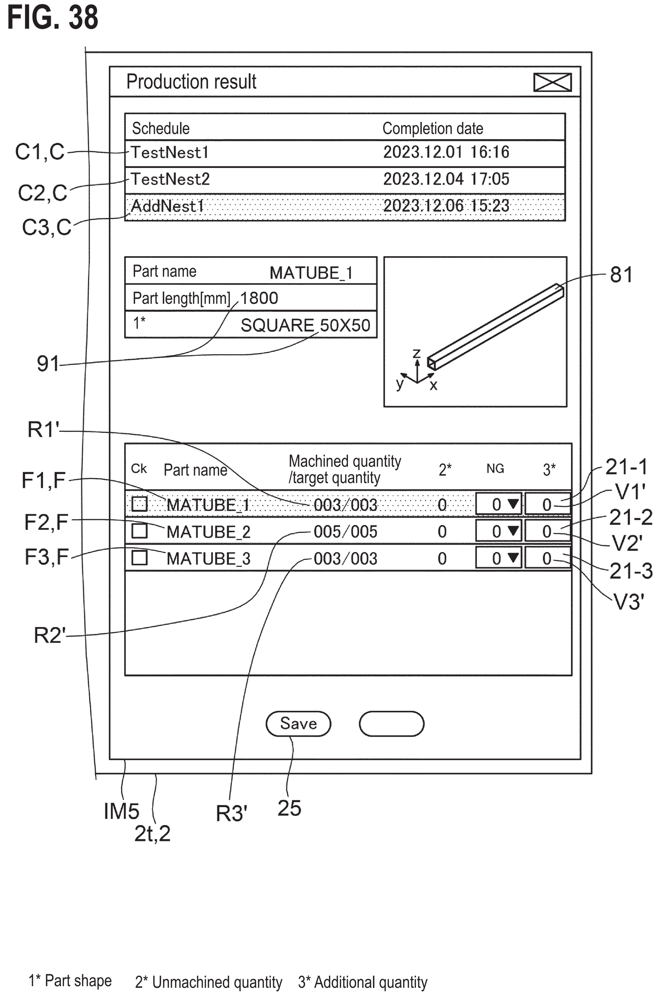

A laser beam machining method according to a third embodiment will be described with reference to FIGs. 1 to 38. FIG. 37 is a flowchart illustrating an example of the laser beam machining method according to the third embodiment. FIG. 38 is a diagram schematically illustrating a state in which machining results of parts are displayed on the display 2.

The laser beam machining method of the third embodiment may be executed by the laser beam machining system 100A of the first embodiment, the laser beam machining system 100B of the second embodiment, or other laser beam machining system.

At a first step ST1, the at least one machining program PM is generated. The first step ST1 is a machining program generation step. The machining program generation step may be performed using the CAD/CAM system 7 or other device.

The at least one machining program PM that has been generated is stored in the memory 6 of the controller 1 (refer to FIGs. 1 and 28).

At a second step ST2, the first control command SA is generated. The second step ST2 is a first control command generation step. The first control command generation step is executed by the controller 1. More specifically, the first control command SA is generated by the controller 1 executing the at least one machining program PM.

At a third step ST3, the at least one first part Q1 is produced. The third step ST3 is a first production step. The first production step is executed by the laser beam machine 101. More specifically, the at least one first part Q1 is produced by the laser beam machine 101 that receives the first control command SA.

The first production step may include automatically storing, in the memory 6, the first machined quantity M1 indicating the quantity of the first part Q1 that has been actually produced out of the at least one first part Q1 intended to be produced by the laser beam machine 101, based on the first control command SA. Additionally, the first production step may include automatically storing, in the memory 6, the first unmachined quantity U1 indicating the quantity of the first part Q1 that has not been produced out of the at least one first part Q1 intended to be produced by the laser beam machine 101, based on the first control command SA.

The first production step (the third step ST3) may include the laser beam machine 101 that receives the first control command SA producing the at least one second part Q2. Additionally, the first production step (the third step ST3) may include the laser beam machine 101 that receives the first control command SA producing the at least one third part Q3.

At a fourth step ST4, the machining result of the part produced by the laser beam machine 101 is displayed. The fourth step ST4 is a machining result displaying step.

As illustrated in FIGs. 3, 11, and 29, the machining result displaying step (the fourth step ST4) includes displaying, on the display 2 of the controller 1, the first image IM1 including the first machining result R1 indicating the machining result of the first part Q1 produced by the laser beam machine 101 operating based on the first control command SA.

The first image IM1 may include the second machining result R2 indicating the machining result of the second part Q2 produced by the laser beam machine 101 operating based on the first control command SA. Additionally, the first image IM1 may include the third machining result R3 indicating the machining result of the third part Q3 produced by the laser beam machine 101 operating based on the first control command SA.

The first machining result R1, the second machining result R2, and the third machining result R3 have already been described in the first embodiment and the second embodiment, and therefore redundant descriptions for the first machining result R1, the second machining result R2, and the third machining result R3 will be omitted.

As illustrated in FIGs. 3, 11, and 29, the machining result displaying step (the fourth step ST4) may include displaying the first machining result R1 on the display 2 and displaying the first quantity V1 indicating the additional order quantity of the first part Q1 on the display 2 in a format editable by the operator. More specifically, the first image IM may include the first quantity input field 21-1, which is the input field of the first quantity V1. Additionally, the first image IM 1 may include the second quantity input field 21-2, which is the input field of the second quantity V2 indicating the additional order quantity of the second part Q2, and/or the third quantity input field 21-3, which is the input field of the third quantity V3 indicating the additional order quantity of the third part Q3.

In the example illustrated in FIG. 12, the first image IM1 includes the input field 22-1, which is the input field of the first defective part quantity D1. Additionally, the first image IM1 may include the second input field 22-2, which is the input field of the second defective part quantity D2, and/or the third input field 22-3, which is the input field of the third defective part quantity D3. The first defective part quantity D1, the second defective part quantity D2, the third defective part quantity D3, the first input field 22-1, the second input field 22-2, and the third input field 22-3 have already been described in the first embodiment, and therefore redundant descriptions for these quantities and these input fields will be omitted.

At a fifth step ST5, the inputter 3 of the controller 1 receives the input of the first quantity V1 indicating the additional order quantity of the first part Q1 or the input of the first instruction to change the first quantity V1. The fifth step ST5 is an input receiving step.

In the example illustrated in FIGs. 4, 15, and 30, the inputter 3 of the controller 1 receives the input of the first quantity V1 indicating the additional order quantity of the first part Q1. In the example illustrated in FIG. 14, the inputter 3 of the controller 1 receives the input of the first instruction to change the first quantity V1 (for example, the input of the first defective part quantity D1).

The input receiving step (the fifth step ST) may include the inputter 3 of the controller 1 receiving the input of the second quantity V2 indicating the additional order quantity of the second part Q2 or the input of the second instruction to change the second quantity V2. Additionally, the input receiving step (the fifth step ST) may include the inputter 3 of the controller 1 receiving the input of the third quantity V3 indicating the additional order quantity of the third part Q3 or the input of the third instruction to change the third quantity V3.

At a sixth step ST6, the nesting process is performed. The sixth step ST6 is a nesting process step. The nesting process includes determining the arrangement of the first quantity V1 of the first part Q1 in the at least one workpiece W. Additionally, the nesting process may include determining the arrangement of the second quantity V2 of the second part Q2 in the at least one workpiece W and/or determining the arrangement of the third quantity V3 of the third part Q3 in the at least one workpiece W.

As illustrated in FIG. 21, the nesting conditions (such as the dimension of the workpiece W) may be set before the execution of the nesting process. Additionally, the nesting process may include determining the arrangement of the first quantity V1 of the first part Q1 in the at least one workpiece W1, based on the nesting conditions (for example, the dimension of the workpiece W) that have been set, the dimension of the first part Q1, and the first quantity V1.

As illustrated in FIGs. 23 and 34, the execution result of the nesting process may be displayed on the display 2 after the execution of the nesting process.

The nesting process may be executed by the controller 1. Alternatively, the nesting process may be executed by the CAD/CAM system 7 (refer to FIGs. 27 and 33).

The nesting process and displaying of the execution result of the nesting process have already been described in the first embodiment or the second embodiment, and therefore redundant descriptions for the nesting process and the displaying of the execution result of the nesting process will be omitted.

At a seventh step ST7, the at least one additional machining program PG is generated based at least on the first quantity V1 (more specifically, based on the result of the nesting process). The seventh step ST7 is an additional program generating step.

The additional program generating step (the seventh step ST7) includes generating the at least one additional machining program PG (for example, the additional schedule CG), based on the result of the above-described nesting process (more specifically, based on the arrangement of the first quantity V1 of the first part Q1 in the at least one workpiece W, the arrangement of the first quantity V1 of the first part Q1 and the second quantity V2 of the second part Q2 in the at least one workpiece W, or the arrangement of the first quantity V1 of the first part Q1, the second quantity V2 of the second part Q2, and the third quantity V3 of the third part Q3 in the at least one workpiece W).

The additional machining program generation step (the seventh step ST7) is performed by the controller 1B. Alternatively, the additional machining program generation step may be performed by the CAD/CAM system 7.

The at least one additional machining program PG that has been generated is stored in the memory 6 of the controller 1 (refer to FIGs. 25 and 35).

At an eighth step ST8, the second control command SB is generated. The eighth step ST8 is a second control command generation step. The second control command generation step is executed by the controller 1. More specifically, the second control command SB is generated by the controller 1 executing the at least one additional machining program PG (for example, the additional schedule CG).

At a ninth step ST9, the first quantity V1 of the first part Q1 is produced. The ninth step ST9 is a second production step. The second production step is executed by the laser beam machine 101. More specifically, the first quantity V1 of the first part Q1 is produced from the at least one workpiece W by the laser beam machine 101 that receives the second control command SB.

In the example illustrated in FIGs. 9 and 36, the second production step (the ninth step ST) includes the communication circuit 5 transmitting the second control command SB generated by the controller 1 to the laser beam machine 101, and the laser beam machine 101 that receives the second control command SB applying the laser beam to the at least one workpiece W. The first quantity V1 of the first part Q1 is produced from the at least one workpiece W by applying the laser beam to the at least one workpiece W.

The second production step (the ninth step ST9) may include the laser beam machine 101 that receives the second control command SB producing the second quantity V2 of the second part Q2 from the at least one workpiece W. Additionally, the second production step (the ninth step ST9) may include the laser beam machine 101 that receives the second control command SB producing the third quantity V3 of the third part Q3 from the at least one workpiece W.

At a tenth step ST10, the additional machining result of the part produced by the laser beam machine 101 operating based on the second control command SB is displayed. The tenth ST10 is an additional machining result displaying step.

As illustrated in FIG. 38, the additional machining result displaying step (the tenth step ST10) includes displaying, on the display 2 of the controller 1, a fifth image IM5 including a first additional machining result R1' indicating the additional machining result of the first part Q1 produced by the laser beam machine 101 operating based on the second control command SB.

The fifth image IM5 may include a second additional machining result R2' indicating the additional machining result of the second part Q2 produced by the laser beam machine 101 operating based on the second control command SB. Additionally, the fifth image IM5 may include a third additional machining result R3' indicating the additional machining result of the third part Q3 produced by the laser beam machine 101 operating based on the second control command SB.

In the example illustrated in FIG. 38, in response to a schedule identifier C3 identifying the additional schedule CG being selected out of the plurality of schedule identifiers C displayed on the display 2, the display 2 displays, on the fifth image IM5, the machining result of each part produced by the laser beam machine 101, based on the execution of the additional schedule CG (for example, the first additional machining result R1', the second additional machining result R2', and/or the third additional machining result R3', as described above).

As illustrated in FIG. 38, the additional machining result displaying step (the tenth step ST10) may include displaying, on the display 2, the first additional machining result R1' and displaying, on the display 2, a first quantity V1' indicating a further additional order quantity of the first part Q1 in a format editable by the operator. More specifically, the fifth image IM5 may include the first quantity input field 21-1, which is the input field of the first quantity V1'. Additionally, the fifth image IM5 may include the second quantity input field 21-2, which is the input field of a second quantity V2' indicating a further additional order quantity of the second part Q2, and/or the third quantity input field 21-3, which is the input field of a third quantity V3' indicating a further additional order quantity of the third part Q3.

In the laser beam machining method according to the third embodiment, it is possible for the user to input the first quantity V1 or the first instruction to change the first quantity V1 taking into consideration the first machining result R1. Further, in the laser beam machining method according to the third embodiment, the first machining result R1 is displayed on the display 2 of the controller 1A, and the input of the above-described first quantity V1 or the input of the above-described first instruction is performed via the inputter 3 of the controller 1A. It is therefore possible for the user (more specifically, the operator) to execute the procedure for additionally producing the first part Q1 on site (more specifically, at the location where the laser beam machine 101 is installed). This facilitates the procedure for additionally producing the first part Q1 and reduces a workload and a work time for additionally producing the first part Q1. Furthermore, it is unnecessary for the user (more specifically, an operator) to move from the site (more specifically, from the location where the laser beam machine 101 is installed) to the office at which management of the machining result is performed in order to additionally produce the first part Q1.

It should be clearly understood that the present invention is not limited to the above-described embodiments or modifications, and each of the embodiments or modifications may be deformed or modified as required within the range of the technical ideas obtainable from the present invention. Various techniques used in each of the embodiments or modifications may be applied to other embodiments or modifications unless a technical contradiction arises. Furthermore, any optional additional structure in each of the embodiments or modifications may be omitted as required.

### Description of Reference Numerals

1, 1A, 1B...controller, 2... display, 2t...touch-panel display, 3...inputter, 4...computing apparatus, 4a... processor, 5... communication circuit, 6...memory, 7... CAD/CAM system, 15...bus, 21-1...first quantity input field, 21-2...second quantity input field, 21-3...third quantity input field, 21a...plus button, 21b...minus button, 22-1...first input field, 22-2... second input field, 22-3...third input field, 24-1...first selection field, 24-2...second selection field, 24-3...third selection field, 25...first save button, 26-1...field that accepts correction of first quantity, 27...input field, 27-1... dimension input field, 27-2...field that accepts input of data specifying length of margin of edge portion of workpiece, 28...fourth button, 29...fifth button, 41...machining result creator, 42...nesting processor, 43...machining program generator, 61-1...first identification information, 61-2...second identification information, 61-3...third identification information, 62-1...first part data, 62-2...second part data, 62-3...third part data, 69...portable memory, 81... modeling image of first part being modeled, 82...modeling image of second part being modeled, 91... dimension data of first part, 92... dimension data of second part, 94... data indicating dimension of workpiece, 95... data specifying execution order of plurality of additional machining programs, 100, 100A, 100B...laser beam machining system, 101...laser beam machine, 103...loader, 105... laser beam machining unit, 107...unloader, 110...laser irradiator, 111...laser head, 112...laser emission port, 113...laser light source, 115...optical component, 120...mover, 121...first mover, 122a...first moving body, 122b...first drive device, 123a...second moving body, 123b... second drive device, 130...work holder, 131...first chuck, 132...grip member, 134...second chuck, 135...guide roller, 137...rotational driver, B...workpiece, BN1...first button, BN2...second button, BN3...third button, BT1...hardware button, BT2...hardware button, C... schedule identifier, C1...first schedule identifier, C2... second schedule identifier, C3...schedule identifier identifying additional schedule, CG... additional schedule, CM1...first schedule, CM2...second schedule, CT1...data indicating date and time at which first schedule is executed, CT2... data indicating date and time at which second schedule is executed, D...inspection data, D1...first defective part quantity, D2...second defective part quantity, D3...third defective part quantity, DA... data including first quantity, DF1...default value of first quantity, DF2...default value of second quantity, DF3... default value of third quantity, DT... arrangement data, E... workpiece identifier, E1...first workpiece identifier, E2... second workpiece identifier, E3...third workpiece identifier, F...part type identifier, F1...first identifier, F2... second identifier, F3... third identifier, H1...data indicating time required to produce plurality of parts from first workpiece, IG... image indicating arrangement of at least one first part in at least one workpiece, IM1...first image, IM2...second image, IM3...third image, IM4...fourth image, IM4-1...image indicating positional relationship between first workpiece and plurality of parts to be produced from first workpiece, IM4-2...image indicating positional relationship between second workpiece and plurality of parts to be produced from second workpiece, IM5...fifth image, IN1...image that accepts start instruction for nesting process, IN2...image that accepts start instruction for generating order list, IN3...image that accepts start instruction for process of generating at least one additional machining program, J... program identifier, J1...first program identifier, J2...second program identifier, J3...third program identifier, LN...wired, LT...order list, M1...first machining quantity, M2...second machining quantity, M3...third machining quantity, N1-1...quantity of first part to be produced from first workpiece, N1-2...quantity of second part to be produced from first workpiece, N2-1... quantity of first part to be produced from second workpiece, N2-2...quantity of second part to be produced from second workpiece, N2-3...quantity of third part to be produced from second workpiece, P... program, PD... machining result generating program, PG... additional machining program, PG1...first additional machining program, PG2...second additional machining program, PG3...third additional machining program, PJ...computing program, PM... machining program, PM'...machining program, PM1...first machining program, PM2...second machining program, PN...nesting program, PS... system program, PT... machining program generating program, Q...part, Q1...first part, Q2...second part, Q3...third part, Q4...fourth part, R... machining result data, R1...first machining result, R1'...first additional machining result, R2... second machining result, R2... second additional machining result, R3... third machining result, R3'...third additional machining result, R4...fourth machining result, RF... machining result file, SA...first control command, SA1...movement command, SA2... emission command, SB...second control command, SB1...movement command, SB2...emission command, SB3... rotation command, SP1...work room, SP2...office space, T1...first target quantity, T2... second target quantity, T3... third target quantity, U1...first unmachined quantity, U2...second unmachined quantity, U3...third unmachined quantity, V... additional order data, V1, V1'...first quantity, V2, V2'...second quantity, V3, V3'... third quantity, V4...fourth quantity, W...workpiece, W-1...first workpiece, W-2...second workpiece, W-3...third workpiece, Ws...offcut

## Claims

1. A controller for a laser beam machine, the controller comprising:
a display configured to display a first machining result indicating a machining result of a first part produced by the laser beam machine, the laser beam machine operating based on a first control command generated by execution of at least one machining program;
an inputter configured to, when an additional order quantity of the first part is defined as a first quantity and a process comprising making a determination of arrangement of the first part of the first quantity in at least one workpiece is defined as a nesting process, receive input of the first quantity or input of a first instruction to change the first quantity and a start instruction for the nesting process;
a computing apparatus configured to generate a second control command that causes the laser beam machine to produce the first part of the first quantity from the at least one workpiece by executing at least one additional machining program generated based on a result of the nesting process; and
a communication circuit configured to transmit the second control command to the laser beam machine.

2. The controller for the laser beam machine according to claim 1, wherein, in response to the inputter receiving the input of the first quantity or the input of the first instruction to change the first quantity, the display displays the first machining result and the first quantity at a same time.

3. The controller for the laser beam machine according to claim 1 or 2, wherein the display displays an image that accepts the start instruction for the nesting process.

4. The controller for the laser beam machine according to any one of claims 1 to 3, wherein the display is configured to, in response to the determination of the arrangement of the first part of the first quantity in the at least one workpiece, display an image indicating a positional relationship between a first workpiece comprised in the at least one workpiece and a plurality of parts to be produced from the first workpiece.

5. The controller for the laser beam machine according to any one of claims 1 to 4, wherein
when a quantity of the first part intended to be produced by the laser beam machine operating based on the first control command is defined as a first target quantity and a quantity of the first part produced by the laser beam machine operating based on the first control command is defined as a first machined quantity, the first machining result displayed on the display comprises:
a first identifier that identifies the first part; and
a first unmachined quantity that indicates a difference between the first target quantity and the first machined quantity.

6. The controller for the laser beam machine according to claim 5, wherein the display is configured to display a value indicating the difference as a default value of the first quantity.

7. The controller for the laser beam machine according to any one of claims 1 to 4, wherein
when a quantity of the first part produced by the laser beam machine operating based on the first control command is defined as a first machined quantity and a quantity of a defective part of the first part produced by the laser beam machine operating based on the first control command is defined as a first defective part quantity, the first machining result displayed on the display comprises the first machined quantity, and
the computing apparatus is configured to, when a value of the first defective part quantity input in the computing apparatus via the inputter is K1, automatically correct the first machined quantity to reduce a value of the first machined quantity by K1, and the display is configured to display the first machined quantity that has been corrected.

8. The controller for the laser beam machine according to any one of claims 1 to 7, wherein
the display is configured to display a second machining result indicating a machining result of the second part produced by the laser beam machine operating based on the first control command, and
when an additional order quantity of the second part is defined as a second quantity, the inputter receives input of the second quantity or input of a second instruction to change the second quantity from a user.

9. The controller for the laser beam machine according to claim 8, wherein the nesting process comprises making a determination of arrangement of the first part of the first quantity in the at least one workpiece and arrangement of the second part of the second quantity in the at least one workpiece, based on a nesting condition that has been set, a dimension of the first part, the first quantity, a dimension of the second part, and the second quantity.

10. The controller for the laser beam machine according to claim 8 or 9, wherein the nesting process comprises making a determination of the arrangement of the first part of the first quantity in the at least one workpiece and the arrangement of the second part of the second quantity in the at least one workpiece to minimize a total amount of a offcut generated from the at least one workpiece.

11. The controller for the laser beam machine according to any one of claims 1 to 10, wherein the inputter receives a start instruction for a process of generating the at least one additional machining program, based on the result of the nesting process.

12. A laser beam machining system comprising:
a laser beam machine; and
a controller configured to control the laser beam machine, wherein
the controller comprises
a display configured to display a first machining result indicating a machining result of a first part produced by the laser beam machine, the laser beam machine operating based on a first control command generated by execution of at least one machining program,
an inputter configured to, when an additional order quantity of the first part is defined as a first quantity and a process comprising making a determination of arrangement of the first part of the first quantity in at least one workpiece is defined as a nesting process, receive input of the first quantity or input of a first instruction to change the first quantity and a start instruction for the nesting process;
a computing apparatus configured to generate a second control command that causes the laser beam machine to produce the first part of the first quantity from the at least one workpiece by executing at least one additional machining program generated based on a result of the nesting process; and
a communication circuit configured to transmit the second control command to the laser beam machine.

13. The laser beam machining system according to claim 12, further comprising a CAD/CAM system configured to generate the at least one machining program.

14. The laser beam machining system according to claim 13, wherein
at least one of the computing apparatus and the CAD/CAM system is configured to execute the nesting process, and
at least one of the computing apparatus and the CAD/CAM system is configured to execute a process of generating the at least one additional machining program, based on the result of the nesting process.

15. A laser beam machining method comprising:
generating at least one machining program;
generating a first control command by a controller configured to execute the at least one machining program;
producing at least one first part by a laser beam machine configured to receive the first control command;
displaying, on a display of the controller, a first machining result indicating a machining result of the first part produced by the laser beam machine operating based on the first control command;
receiving, by an inputter of the controller, input of a first quantity indicating an additional order quantity of the first part or input of a first instruction to change the first quantity;
performing a nesting process comprising making a determination of arrangement of the first part of the first quantity in at least one workpiece;
generating at least one additional machining program, based on a result of the nesting process;
generating a second control command by the controller configured to execute the at least one additional machining program; and
producing the first part of the first quantity from the at least one workpiece by the laser beam machine configured to receive the second control command.
